# EUROPÄISCHE PATENTSCHRIFT

(11) **EP 3 164 331 B1**
(45) Veröffentlichungstag und Bekanntmachung des Hinweises auf die Patenterteilung: **18.03.2020**
(21) Anmeldenummer: 15733464.0
(22) Anmeldetag: 02.07.2015
(51) Int. Cl.: B64D 11/06, B60N 2/427

(54) **FLUGZEUGSITZVORRICHTUNG**
AIRCRAFT SEAT DEVICE
DISPOSITIF DE SIÈGE D'AVION

(30) Priorität: 02.07.2014 DE 102014109285
(43) Veröffentlichungstag der Anmeldung: 10.05.2017
(73) Patentinhaber: Recaro Aircraft Seating GmbH & Co. KG, 74523 Schwäbisch Hall (DE)
(72) Erfinder: REBMANN, Jürgen, Neuenstadt 74196 (DE); SCHMEER, Dietmar, 74542 Braunsbach (DE); DAHER, Mohammed, 71332 Waiblingen (DE); JÄGER, Gunther, 74429 Sulzbach-Laufen (DE); WAGNER, Andreas, 74523 Schwäbisch Hall (DE)
(74) Vertreter: Daub, Thomas
(86) Internationale Anmeldenummer: PCT/EP2015/065132
(87) Internationale Veröffentlichungsnummer: WO 2016/001375

(56) Entgegenhaltungen:
- EP-A2- 2 610 178
- EP-A2- 2 610 178
- EP-A2- 2 706 010
- EP-A2- 2 706 010
- DE-A1- 19 853 981
- DE-A1- 19 853 981
- US-A- 2 660 222
- US-A- 2 660 222

## Beschreibung

### Stand der Technik

Die Erfindung betrifft eine Flugzeugsitzvorrichtung nach dem beigefügten Anspruch 1 1.

Es sind bereits Flugzeugsitzvorrichtungen mit zumindest einer Rückenlehne, mit zumindest einem mit der Rückenlehne gekoppelten Sitzbauteil und mit einer Rückenlehnenaufschlagssicherungsvorrichtung, die durch eine teilweise Entkopplung der Rückenlehne von dem Sitzbauteil dazu vorgesehen ist, Aufschlagskräfte auf die Rückenlehne in einem Crashfall zumindest teilweise zu reduzieren, vorgeschlagen worden. EP2610178 A2 offenbart eine Sitzvorrichtung, insbesondere eine Flugzeugsitzvorrichtung, mit einer Rückenlehnenaufschlagssicherungseinheit, die dazu vorgesehen ist, Aufschlagkräfte auf eine Rückenlehne in einem Crashfall zumindest teilweise zu reduzieren. Die Rückenlehnenaufschlagssicherungseinheit eine Stelleinheit aufweist, die zumindest dazu vorgesehen ist, einen Sicherungsvorgang einzuleiten. EP2706010 A2 offenbart eine Sitzenergieabsorptionsvorrichtung, insbesondere einer Flugzeugsitzenergieabsorptionsvorrichtung, die dazu vorgesehen ist, zumindest in einem Crashfall zumindest eine Hauptbeschleunigungsbewegung zumindest einer Rückenlehneneinheit zumindest teilweise zu absorbieren. Die Sitzenergieabsorptionsvorrichtung zumindest eine Sitzenergieabsorptionseinheit, die dazu vorgesehen ist, in dem Crashfall in zumindest einer von der Hauptbeschleunigungsbewegung der Rückenlehneneinheit abweichenden Richtung bewegt zu werden, aufweist.

Die Aufgabe der Erfindung besteht insbesondere darin, eine gattungsgemäße Vorrichtung mit verbesserten Eigenschaften hinsichtlich einer Sicherheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Flugzeugsitzvorrichtung mit zumindest einer Rückenlehne, mit zumindest einem mit der Rückenlehne gekoppelten Sitzbauteil und mit einer Rückenlehnenaufschlagssicherungsvorrichtung, die durch eine teilweise Entkopplung der Rückenlehne von dem Sitzbauteil dazu vorgesehen ist, Aufschlagskräfte auf die Rückenlehne in einem Crashfall zumindest teilweise zu reduzieren.

Die Rückenlehnenaufschlagssicherungsvorrichtung ist dazu vorgesehen die Rückenlehne vor einem Einwirken der Aufschlagskräfte von dem Sitzbauteil zu entkoppeln. Unter einer "Rückenlehne" soll dabei insbesondere ein Bauteil eines Flugzeugsitzes verstanden werden, an dem eine auf dem Flugzeugsitz sitzende Person ihren Rücken abstützen kann. Unter einem "Sitzbauteil" soll dabei insbesondere ein Bauteil eines Flugzeugsitzes verstanden werden, wie insbesondere ein Sitzgestell oder ein Teil einer festen Struktur des Flugzeugsitzes, wie ein Querrohr. Grundsätzlich ist es auch denkbar, dass das Sitzbauteil als ein anderes, dem Fachmann als sinnvoll erscheinendes Bauteil, insbesondere als ein tragendes Bauteil eines Flugzeugsitzes ausgebildet ist. Unter "gekoppelt" soll dabei insbesondere miteinander verbunden verstanden werden. Dabei ist es denkbar, dass zwei Elemente, die miteinander gekoppelt sind, direkt oder indirekt über wenigstens ein weiteres Element miteinander verbunden sind. Unter einer "teilweisen Entkopplung" soll dabei insbesondere verstanden werden, dass eine Bewegung der Rückenlehne und eine Bewegung des Sitzbauteils zumindest für eine definierte Zeit und/oder über eine definierte Verfahrstrecke voneinander getrennt werden, sodass sich die Rückenlehne über eine definierte Zeit und/oder über eine definierte Verfahrstrecke zu dem Sitzbauteil bewegen kann. Unter "Aufschlagskräften" sollen dabei Kräfte verstanden werden, die von Objekten, wie insbesondere von einem Körper eines auf dem Flugzeugsitz sitzenden Passagiers, bei Auftreffen auf ein Element, wie insbesondere die Rückenlehne, entstehen. Unter einem "Crashfall" soll dabei insbesondere ein Überlastfall verstanden werden, also ein Betriebszustand, in dem Kräfte auf die Flugzeugsitzvorrichtung und/oder den Flugzeugsitz, dessen Teil die

Flugzeugsitzaufständervorrichtung ist, wirken, die größer sind als Kräfte, die durch eine normale Belastung bei einem normalen Flugbetrieb entstehen. Unter "vor einem Einwirken der Aufschlagskräfte" soll dabei insbesondere ein Zeitpunkt, bevor der Körper eines Passagiers auf die Rückenlehne der Flugzeugsitzvorrichtung auftrifft, verstanden werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Dadurch kann vorteilhaft eine Flugzeugsitzvorrichtung bereitgestellt werden, die in einem Crashfall einen in einem Flugzeugsitz sitzenden Passagier besonders vorteilhaft vor Verletzungen schützt. Durch die Reduzierung der Aufschlagskräfte auf die Rückenlehne werden sowohl die auf die Rückenlehne wirkenden Kräfte als auch die auf den Körper des Passagiers wirkenden Kräfte reduziert, was vorteilhaft eine Verletzungsgefahr reduziert.

Die Rückenlehnenaufschlagssicherungsvorrichtung aufweist wenigstens ein Trägheitsmodul das dazu vorgesehen ist, die Rückenlehnenaufschlagssicherungsvorrichtung zumindest in einem Crashfall zu entkoppeln. Unter einem "Trägheitsmodul" soll dabei insbesondere ein Modul verstanden werden, das aufgrund einer Massenträgheit ausgelöst und aus einer Verriegelposition gelöst wird. Dabei ist das Trägheitsmodul vorzugsweise von einem Element gebildet, das durch seine Trägheit dazu vorgesehen ist, eine Betätigung auszuführen. Dabei wird das Trägheitsmodul durch seine Massenträgheit bei einem Einwirken von Verzögerungskräften, insbesondere in einem Crashfall, aus einer Verriegelposition ausgelenkt. Dabei wird das Trägheitsmodul vorzugsweise axial entlang einer Verschiebeachse aus der Verriegelposition ausgelöst. Grundsätzlich ist es auch denkbar, dass das Trägheitsmodul entlang einer anders ausgebildeten Verschiebelinie verschoben wird, beispielsweise auf einer Kreisbahn, wenn das Trägheitsmodul eine Art Pendel ausbildet. Dabei kann eine Auslösekraft, die nötig ist, um das Trägheitsmodul aus seiner Verriegelposition auszulenken, über die Masse des Trägheitsmoduls eingestellt werden. Dadurch kann die Auslösekraft für unterschiedlich große Sitze oder unterschiedlich große Sitzabstände in einem Flugzeug einfach eingestellt werden. Grundsätzlich ist es auch denkbar, dass das Trägheitsmodul zumindest einen elektronischen Beschleunigungssensor und einen elektrisch und/oder elektronisch ansteuerbaren Verriegelungsmechanismus aufweist, wobei der Verriegelungsmechanismus bei einer definierten, von dem zumindest einen Beschleunigungssensor erfassten Beschleunigung angesteuert und geöffnet wird. Dabei ist es grundsätzlich denkbar, dass der Verriegelungsmechanismus per Pyrotechnik oder über einen elektro-mechanischen Schalter ausgelöst wird.

Das Trägheitsmodul ist dazu vorgesehen die Rückenlehnenaufschlagssicherungsvorrichtung zumindest in einem Normalbetriebszustand zu verriegeln. Unter einem "Normalbetriebszustand" soll dabei insbesondere ein Betriebszustand während eines normalen Betriebs der Flugzeugsitzvorrichtung verstanden werden, insbesondere während eines in einem Flugzeug eingebauten Zustands und während eines Betriebs des Flugzeugs. Unter "verriegeln" soll dabei insbesondere in einer definierten Position, insbesondere in einer Verriegelposition halten verstanden werden. Dadurch kann die Rückenlehne in dem Normalbetriebszustand vorteilhaft zu dem Sitzbauteil fixiert werden, sodass eine normale Benutzung der Flugzeugsitzvorrichtung erreicht werden kann. Dadurch kann die Rückenlehnenaufschlagssicherungsvorrichtung vorteilhaft einfach mittels des Trägheitsmoduls verriegelt werden.

Ferner wird vorgeschlagen, dass das Trägheitsmodul im Crashfall zur Entriegelung der Rückenlehnenaufschlagssicherungsvorrichtung dazu vorgesehen ist, aus einer Verriegelposition ausgelenkt zu werden. Unter einer "Verriegelposition" soll dabei insbesondere eine Position bzw. Stellung der Rückenlehnenaufschlagssicherungsvorrichtung verstanden werden, in der die Rückenlehnenaufschlagssicherungsvorrichtung verriegelt ist und insbesondere die Rückenlehne mit dem Sitzbauteil voll gekoppelt ist. Unter "auslenken" soll dabei insbesondere aus einer definierten Stellung herausbewegen verstanden werden, wobei es sich um eine Axialbewegung und/oder eine Schwenkbewegung handeln kann. Dadurch kann das Trägheitsmodul die Rückenlehnenaufschlagssicherungsvorrichtung besonders vorteilhaft entriegeln.

Es wird weiterhin vorgeschlagen, dass das Trägheitsmodul im Crashfall dazu vorgesehen ist, vor einem Einwirken der Aufschlagskräfte aus einer Verriegelposition ausgelenkt zu werden. Dadurch kann die Rückenlehnenaufschlagssicherungsvorrichtung besonders vorteilhaft früh entriegelt werden.

Zudem wird vorgeschlagen, dass die Rückenlehnenaufschlagssicherungsvorrichtung zumindest ein Anbindungselement umfasst, das dazu vorgesehen ist, mit dem Sitzbauteil gekoppelt zu werden. Unter einem "Anbindungselement" soll dabei insbesondere ein Element verstanden werden, das zur Verbindung zweier Elemente vorgesehen ist, wobei über das Anbindungselement Kräfte zwischen den beiden verbundenen Elementen übertragen werden können. Dadurch kann das Sitzbauteil vorteilhaft an die Rückenlehnenaufschlagssicherungsvorrichtung angebunden werden.

Weiterhin wird vorgeschlagen, dass die Rückenlehnenaufschlagssicherungsvorrichtung ein Gehäuseelement umfasst, in dem das Trägheitsmodul axial verschiebbar gelagert ist. Unter "axial verschiebbar gelagert" soll dabei insbesondere verstanden werden, dass das Trägheitsmodul in einer Axialrichtung verschiebbar gelagert ist. Dabei ist die Axialrichtung vorzugsweise parallel zu einer Flugrichtung ausgerichtet. Dadurch kann das Trägheitsmodul besonders vorteilhaft in der Rückenlehnenaufschlagssicherungsvorrichtung angeordnet werden.

Es wird weiter vorgeschlagen, dass die Rückenlehnenaufschlagssicherungsvorrichtung wenigstens ein Kniegelenk umfasst, das im Normalbetriebszustand dazu vorgesehen ist, mit dem Trägheitsmodul gekoppelt zu sein. Unter einem "Kniegelenk" soll dabei insbesondere ein Bauteil verstanden werden, das aus zumindest zwei Elementen besteht, die um eine Schwenkachse schwenkbar miteinander verbunden sind. Unter "gekoppelt" soll dabei insbesondere direkt oder indirekt, also über zumindest ein weiteres Element, miteinander verbunden verstanden werden. In einem Zustand, in dem das Kniegelenk mit dem Trägheitsmodul gekoppelt ist, kann eine einfache Kraftübertragung über das Kniegelenk erfolgen, wodurch die Rückenlehnenaufschlagssicherungsvorrichtung vorteilhaft ausgebildet werden kann.

Weiter wird vorgeschlagen, dass das Kniegelenk gelenkig mit dem Gehäuseelement und mit dem Anbindungselement verbunden ist. Unter "verbunden" soll dabei insbesondere mittels einer dem Fachmann als sinnvoll erscheinenden Methode starr oder gelenkig angebunden verstanden werden. Dadurch kann in einer Stellung des Kniegelenks vorteilhaft eine Kraft zwischen dem Gehäuseelement und dem Anbindungselement übertragen werden.

Ferner wird vorgeschlagen, dass das Kniegelenk wenigstens ein Formschlusselement aufweist, das in einer Verriegelposition dazu vorgesehen ist, formschlüssig mit dem Trägheitsmodul verbunden zu sein. Unter einem "Formschlusselement" soll dabei insbesondere ein Element verstanden werden, das dazu vorgesehen ist, über zumindest einen Formschluss mit einem anderen Element verbunden zu werden. Dadurch kann das Trägheitsmodul vorteilhaft einfach mit dem Kniegelenk gekoppelt werden.

Es wird weiterhin vorgeschlagen, dass das Gehäuseelement wenigstens ein Führungselement aufweist, in dem das Anbindungselement mit einem ersten Ende axial verschiebbar befestigt ist. Unter einem "Führungselement" soll dabei insbesondere ein Element verstanden werden, das zur Führung eines anderen Elements vorgesehen ist oder dazu vorgesehen ist, von einem anderen Element geführt zu werden. Dabei ist das Führungselement vorzugsweise als eine Nut ausgebildet. Grundsätzlich ist es auch denkbar, dass ein Führungselement als eine Führungsschiene ausgebildet ist. Dadurch kann das Anbindungselement vorteilhaft an der Rückenlehnenaufschlagssicherungsvorrichtung angebracht werden.

Zudem wird vorgeschlagen, dass das Gehäuseelement wenigstens ein Führungselement aufweist, über das das Trägheitsmodul axial verschiebbar in dem Gehäuseelement angeordnet ist. Dadurch kann das Trägheitsmodul vorteilhaft für eine Auslösung der Rückenlehnenaufschlagssicherungsvorrichtung in dem Gehäuseelement gelagert werden.

Weiterhin wird vorgeschlagen, dass die Rückenlehnenaufschlagssicherungsvorrichtung wenigstens ein Verzögerungselement aufweist, das zur Aufnahme von Trägheitsenergie der Rückenlehne nach einem Auslösen der Rückenlehnenaufschlagssicherungsvorrichtung vorgesehen ist. Unter einem "Verzögerungselement" soll dabei insbesondere ein Element verstanden werden, das in wenigstens einem Betriebszustand dazu vorgesehen ist, Energie aufzunehmen und/oder zu vernichten, um so einem anderen System, wie insbesondere der Rückenlehne, Energie zu entziehen. Dabei ist das Verzögerungselement vorzugsweise als ein Element ausgebildet, das durch plastische Verformung gedehnt wird und durch die plastische Verformung eine Energie vernichtet. Dabei ist das Verzögerungselement vorzugsweise aus einem Metall gebildet und weist eine Wellenform auf, die im Verlauf einer Dehnung auseinandergezogen wird und so Verformungsenergie aufnimmt. Dabei kann über eine Materialstärke, das Material und eine Form des Verzögerungselements eine Kraft eingestellt werden, die nötig ist, um das Verzögerungselement zu dehnen. Grundsätzlich ist es auch denkbar, dass das Verzögerungselement als ein Hydraulik- oder Gasdruckzylinder ausgebildet ist, dessen Zylinderstange gegen den Druck eines Gases oder einer Flüssigkeit aus einem Gehäuse ausgefahren werden kann. Grundsätzlich ist es ebenfalls denkbar, dass das Verzögerungselement als ein Element ausgebildet ist, das dazu vorgesehen ist, zur Verzögerung eines anderen Elements zerstört zu werden, um dadurch Energie abzubauen. Dabei ist es denkbar, dass das Verzögerungselement als ein Steg ausgebildet ist, der eine Nut überspannt und zur Verzögerung eines Elements von einem in der Nut verfahrenden Bolzen oder Stift zerstört wird. Grundsätzlich ist es auch denkbar, dass das Verzögerungselement von wenigstens einem Element, wie einer Nut, gebildet wird, die einen verengenden Verlauf aufweist und zur Verzögerung eines anderen Elements von einem in der Nut laufenden Stiftelement aufgedehnt wird. Dadurch kann eine Aufschlagskraft eingestellt und die Rückenlehne gezielt abgebremst werden. Des Weiteren kann vorteilhaft durch Modifikation des Verzögerungselements eine Kraft eingestellt werden, bei der sich das Kniegelenk zu dem Gehäuseelement bewegen kann.

Es wird weiter vorgeschlagen, dass das Verzögerungselement zumindest zur Einstellung einer Aufschlagskraft vorgesehen ist. Unter einer "Aufschlagskraft" soll dabei insbesondere eine Kraft verstanden werden, mit der ein Testkörper in einem standardisierten Crashtest für einen Flugzeugsitz auf die Rückenlehne aufschlägt. Dadurch kann die Rückenlehnenaufschlagssicherungsvorrichtung besonders einfach, lediglich durch Abänderung des Verzögerungselements, an unterschiedliche Sitztypen oder unterschiedliche Sitzabstände in einem Flugzeug angepasst werden.

Es wird weiter vorgeschlagen, dass die Rückenlehne dazu vorgesehen ist, nach der teilweisen Entkopplung wieder in einer Verriegelstellung verriegelt zu werden. Unter "verriegeln" soll dabei insbesondere in einer definierten Position, insbesondere in einer Verriegelposition halten verstanden werden. Unter "nach einer teilweisen Entkopplung" soll dabei insbesondere zu einem Zeitpunkt nach der teilweisen Entkopplung während eines Crashfalls verstanden werden. Dadurch kann vorteilhaft eine Flugzeugsitzvorrichtung bereitgestellt werden, die in einem Crashfall einen in einem Flugzeugsitz sitzenden Passagier besonders vorteilhaft vor Verletzungen schützt, und nachdem die Rückenlehne während des Crashfalls durch die Rückenlehnenaufschlagssicherungsvorrichtung verschwenkt wurde, wieder in einer Stellung arretiert werden kann, um einen Fluchtweg vorteilhaft frei halten zu können. Dadurch kann ein besonders sicherer Flugzeugsitz bereitgestellt werden.

Weiter wird vorgeschlagen, dass die Rückenlehnenaufschlagssicherungsvorrichtung dazu vorgesehen ist, nach der teilweisen Entkopplung wieder in eine Verriegelstellung gebracht zu werden. Dabei ist die Rückenlehnenaufschlagssicherungsvorrichtung vorzugsweise durch einen Formschluss in der Verriegelstellung gehalten. Grundsätzlich ist es aber auch denkbar, dass die Rückenlehnenaufschlagssicherungsvorrichtung durch eine Magnetkraft und/oder elektrisch in der Verriegelstellung verriegelt wird. Grundsätzlich ist es auch denkbar, dass eine formschlüssige Verbindung in der Verriegelstellung nach der teilweisen Entkopplung während eines Crashfalls durch eine pyrotechnisch ausgelöste plastische Verformung erreicht wird. Dadurch kann vorteilhaft die Flugzeugsitzvorrichtung besonders vorteilhaft und insbesondere bauteilarm ausgebildet werden.

Es wird weiterhin vorgeschlagen, dass die Rückenlehnenaufschlagssicherungsvorrichtung wenigstens ein Verriegelungsmodul aufweist, das in einer Verriegelstellung die Rückenlehnenaufschlagssicherungsvorrichtung sperrt und in einer Entriegelstellung diese zumindest teilweise entkoppelt, wobei die Rückenlehnenaufschlagssicherungsvorrichtung von der Entriegelstellung in die Verriegelstellung überführbar ist. Unter einem "Verriegelungsmodul" soll dabei insbesondere ein Modul verstanden werden, das wenigstens zwei zueinander korrespondierend ausgebildete Kraft- und/oder Formschlusselemente aufweist, die in einer Verriegelstellung miteinander gekoppelt sind, wobei Kräfte zwischen den Kraft- und/oder Formschlusselementen übertragen werden können. In einer Entriegelstellung sind die Kraft- und/oder Formschlusselemente des Verriegelungsmoduls zumindest teilweise voneinander gelöst und können wenigstens in einem definierten Bereich relativ zueinander bewegt werden. In der Entriegelstellung ist dabei vorzugsweise keine Kraftübertragung zwischen den Kraft- und/oder Formschlusselementen möglich. Dadurch kann eine Verriegelung der Rückenlehne nach dem teilweisen Entkoppeln besonders einfach durch die Rückenlehnenaufschlagssicherungsvorrichtung realisiert werden.

Weiter wird vorgeschlagen, dass die Flugzeugsitzvorrichtung wenigstens ein Zusatzkraftelement aufweist, das zumindest dazu vorgesehen ist, die Rückenlehne unmittelbar nach der teilweisen Entkoppelung zumindest temporär zu beschleunigen. Unter einem "Zusatzkraftelement" soll dabei insbesondere ein Element verstanden werden, das in zumindest einem Betriebszustand eine Kraft bereitstellen kann, mittels der ein Element, wie insbesondere die Rückenlehne, zumindest temporär beschleunigt werden kann. Das Zusatzkraftelement ist dabei vorzugsweise als ein Federelement ausgebildet, das zur Bereitstellung der Kraft vorgespannt wird und so eine Federkraft bereitstellt. Dabei kann das Zusatzkraftelement beispielsweise als eine Gasdruckfeder oder ein elastisch verformbares Element, wie insbesondere eine Spiralfeder, ausgebildet sein. Grundsätzlich ist es auch denkbar, dass das Zusatzkraftelement als eine pyrotechnische Ladung ausgebildet ist, die durch Zündung eine Zusatzkraft bereitstellt. Dadurch kann die Rückenlehne während des Crashfalls vorteilhaft zumindest kurz beschleunigt werden, um eine Differenzgeschwindigkeit zwischen einem Körperteil eines Passagiers und der Rückenlehne zu minimieren und so Aufschlagskräfte vorteilhaft zu verkleinern.

Die erfindungsgemäße Flugzeugsitzvorrichtung soll hierbei nicht auf die oben beschriebene Anwendung und Ausführungsform beschränkt sein.

### Zeichnungen

Weitere Vorteile ergeben sich aus der folgenden Zeichnungsbeschreibung. In den Zeichnungen sind neun Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Schnittansicht einer erfindungsgemäßen Flugzeugsitzvorrichtung in einem ersten Ausführungsbeispiel mit einer Rückenlehnenaufschlagssicherungsvorrichtung in einer Verriegelstellung,
- Fig. 2: eine schematische Schnittansicht der Rückenlehnenaufschlagssicherungsvorrichtung kurz nach dem Auslenken aus der Verriegelstellung,
- Fig. 3: eine schematische Schnittansicht der Rückenlehnenaufschlagssicherungsvorrichtung während eines Crashfalls,
- Fig. 4: eine schematische Schnittansicht der Rückenlehnenaufschlagssicherungsvorrichtung während eines Crashfalls,
- Fig. 5: eine schematische Darstellung der Rückenlehnenaufschlagssicherungsvorrichtung nach einem Crashfall,
- Fig. 6: eine schematische Schnittansicht einer erfindungsgemäßen Flugzeugsitzvorrichtung in einem zweiten Ausführungsbeispiel mit einer Rückenlehnenaufschlagssicherungsvorrichtung in einer Verriegelstellung,
- Fig. 7: eine schematische Schnittansicht der Rückenlehnenaufschlagssicherungsvorrichtung in einer Entriegelstellung,
- Fig. 8: eine schematische Ansicht eines Verzögerungselements einer Rückenlehnenaufschlagssicherungsvorrichtung einer Flugzeugsitzvorrichtung in einem dritten Ausführungsbeispiel,
- Fig. 9: eine schematische Ansicht eines Verzögerungselements einer Rückenlehnenaufschlagssicherungsvorrichtung einer Flugzeugsitzvorrichtung in einem vierten Ausführungsbeispiel,
- Fig. 10: eine schematische Ansicht eines Verzögerungselements einer Rückenlehnenaufschlagssicherungsvorrichtung einer Flugzeugsitzvorrichtung in einem fünften Ausführungsbeispiel,
- Fig. 11: eine schematische Schnittansicht einer erfindungsgemäßen Flugzeugsitzvorrichtung in einem sechsten Ausführungsbeispiel mit einer Rückenlehnenaufschlagssicherungsvorrichtung in einer Verriegelstellung,
- Fig. 12: eine schematische Schnittansicht der Rückenlehnenaufschlagssicherungsvorrichtung der Flugzeugsitzvorrichtung in dem sechsten Ausführungsbeispiel kurz nach dem Auslenken aus der Verriegelstellung,
- Fig. 13: eine schematische Schnittansicht der Rückenlehnenaufschlagssicherungsvorrichtung der Flugzeugsitzvorrichtung in dem sechsten Ausführungsbeispiel nach der teilweisen Entriegelung mit verformtem Verzögerungselement,
- Fig. 14: eine schematische Schnittansicht einer erfindungsgemäßen Flugzeugsitzvorrichtung in einem siebten Ausführungsbeispiel mit einer Rückenlehnenaufschlagssicherungsvorrichtung in einer Verriegelstellung,
- Fig. 15: eine schematische Schnittansicht der Rückenlehnenaufschlagssicherungsvorrichtung der Flugzeugsitzvorrichtung in dem siebten Ausführungsbeispiel kurz nach dem Auslenken aus der Verriegelstellung,
- Fig. 16: eine schematische Schnittansicht der Rückenlehnenaufschlagssicherungsvorrichtung der Flugzeugsitzvorrichtung in dem siebten Ausführungsbeispiel nach der teilweisen Entriegelung mit verformtem Verzögerungselement,
- Fig. 17: eine teilweise schematische Schnittansicht einer erfindungsgemäßen Flugzeugsitzvorrichtung in einem achten Ausführungsbeispiel mit einer Rückenlehnenaufschlagssicherungsvorrichtung in einer Verriegelstellung,
- Fig. 18: eine teilweise schematische Schnittansicht der Rückenlehnenaufschlagssicherungsvorrichtung während einer Entriegelung,
- Fig. 19: eine schematische Schnittansicht der Rückenlehnenaufschlagssicherungsvorrichtung der Flugzeugsitzvorrichtung in dem achten Ausführungsbeispiel nach der teilweisen Entriegelung mit verformtem Verzögerungselement,
- Fig. 20: eine schematische Schnittansicht der Rückenlehnenaufschlagssicherungsvorrichtung der Flugzeugsitzvorrichtung in dem achten Ausführungsbeispiel in einer Verriegelstellung nach der teilweisen Entriegelung und
- Fig. 21: eine schematische Ansicht einer erfindungsgemäßen Flugzeugsitzvorrichtung in einem neunten Ausführungsbeispiel mit einer Rückenlehnenaufschlagssicherungsvorrichtung und einem Zusatzkraftelement.

### Beschreibung der Ausführungsbeispiele

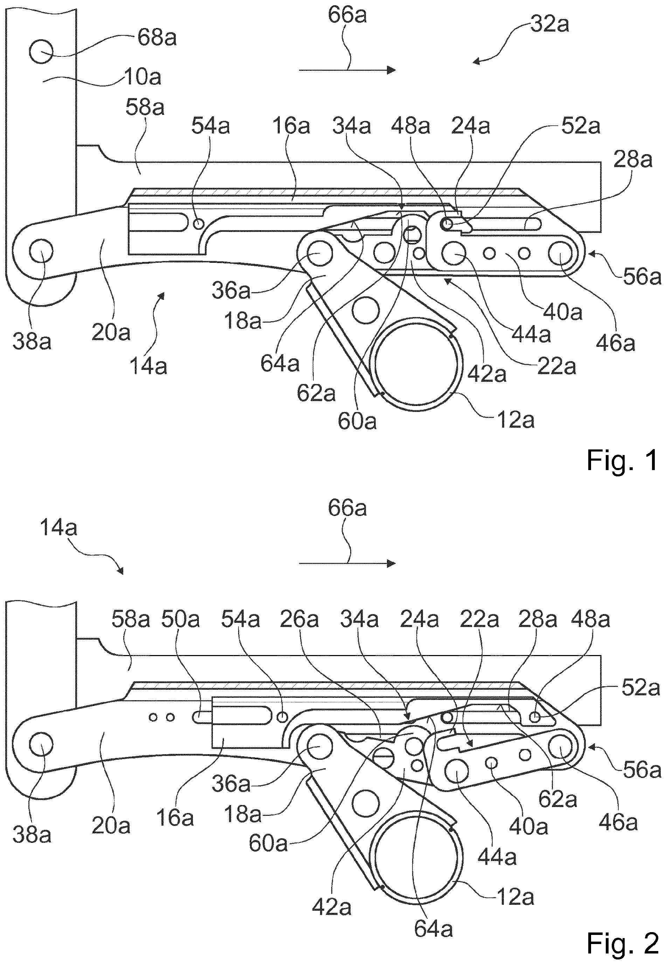

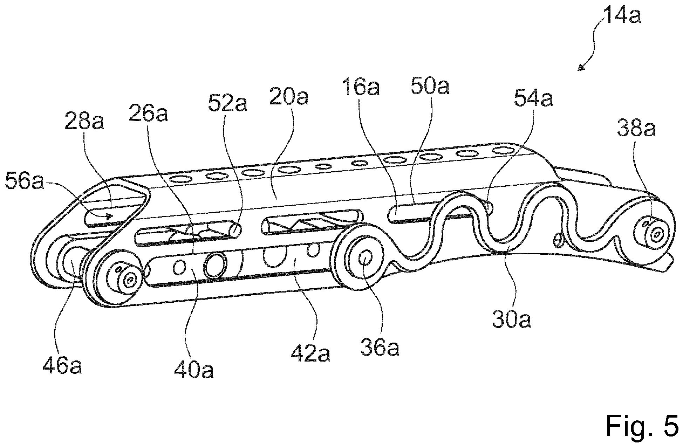

Die Figuren 1 bis 5 zeigen eine erfindungsgemäße Flugzeugsitzvorrichtung in einem ersten Ausführungsbeispiel. Die Flugzeugsitzvorrichtung ist dabei Teil eines teilweise dargestellten Flugzeugsitzes 32a. Der Flugzeugsitz 32a ist dabei Teil eines nicht näher dargestellten Flugzeugs. Der Flugzeugsitz 32a ist dabei in einem montierten Zustand in einer Flugzeugkabine des Flugzeugs aufgeständert. Dazu weist der Flugzeugsitz 32a eine Aufständereinheit auf. Mittels der Aufständereinheit ist der Flugzeugsitz 32a auf einem Kabinenboden der Flugzeugkabine aufgeständert. Der Kabinenboden bildet eine Aufständerebene für den Flugzeugsitz 32a aus. Der Flugzeugsitz 32a ist dabei als ein Teil einer Sitzreihe ausgebildet, die mehr als einen Flugzeugsitz 32a, vorzugsweise zumindest drei Flugzeugsitze 32a, umfasst. Der Flugzeugsitz 32a bildet dabei eine Sitzrichtung aus. Die Sitzrichtung ist als die Richtung definiert, in der ein Passagier auf dem Flugzeugsitz 32a sitzt. Dabei ist die Sitzrichtung parallel zu einer Flugrichtung 66a ausgebildet. Die Flugrichtung 66a ist dabei von einer Haupterstreckung der Flugzeugkabine gebildet. Die Aufständereinheit ist dabei als eine gemeinsame Aufständereinheit der Flugzeugsitze 32a der Flugzeugsitzreihe ausgebildet. Die Flugzeugsitzvorrichtung umfasst eine Rückenlehne 10a. Die Rückenlehne 10a ist dabei dazu vorgesehen, dass eine Person, die auf dem Flugzeugsitz 32a, dessen Teil die Flugzeugsitzvorrichtung ist, sitzt, ihren Rücken an der Rückenlehne 10a abstützen kann. Die Rückenlehne 10a ist schwenkbar zu der Aufständereinheit angeordnet. Die Rückenlehne 10a ist dabei an einem nicht näher dargestellten Sitzteiler über eine Lagerstelle 68a schwenkbar angelenkt. Die Flugzeugsitzvorrichtung umfasst weiter ein Sitzbauteil 12a. Das Sitzbauteil 12a ist als eine Querversteifungseinheit ausgebildet, die dazu vorgesehen ist, die Rückenlehne 10a in der Querversteifungseinheitenquerrichtung zu versteifen. Zudem ist das als Querversteifungseinheit ausgebildete Sitzbauteil 12a dazu vorgesehen, die eine Seite des Flugzeugsitzes 32a, dessen Teil die Flugzeugsitzvorrichtung ist, mit der weiteren Seite des Flugzeugsitzes 32a zu verbinden. Das als Querversteifungseinheit ausgebildete Sitzbauteil 12a erstreckt sich dabei zwischen den nicht näher dargestellten Sitzteilern des Flugzeugsitzes 32a. Das als Querversteifungseinheit ausgebildete Sitzbauteil 12a ist drehbar in den nicht näher dargestellten Sitzteilern gelagert. Das als Querversteifungseinheit ausgebildete Sitzbauteil 12a ist dazu vorgesehen, bei der Bewegung der Rückenlehne 10a gedreht zu werden. Das als Querversteifungseinheit ausgebildete Sitzbauteil 12a ist als ein Torsionselement ausgebildet. Im vorliegenden Ausführungsbeispiel ist das als Querversteifungseinheit ausgebildete Sitzbauteil 12a als ein Torsionsrohr ausgebildet. Ferner weist die Flugzeugsitzvorrichtung einen Sitzboden 58a auf. Grundsätzlich ist es auch denkbar, dass das Sitzbauteil 12a als ein Sitzboden oder ein Bauteil der Sitzstruktur ausgebildet ist. Der Sitzboden 58a bildet eine Sitzfläche aus. Der Sitzboden 58a ist mit der Rückenlehne 10a gekoppelt. Dabei sind die Rückenlehne 10a und der Sitzboden 58a gelenkig miteinander verbunden. Über eine nicht näher dargestellte Kinematik der Flugzeugsitzvorrichtung sind die Rückenlehne 10a und der Sitzboden 58a schwenkbar miteinander gekoppelt. Dabei sind die Rückenlehne 10a und der Sitzboden 58a in verschiedenen Stellungen zueinander verschiebbar und können in diesen verschiedenen Stellungen fixiert werden. Dabei sind die Rückenlehne 10a und der Sitzboden 58a vorzugsweise stufenlos zueinander verschiebbar. Grundsätzlich ist es auch denkbar, dass die Rückenlehne 10a in einem Normalbetriebszustand starr mit dem Sitzboden 58a oder einer Sitzstruktur verbunden ist und der Flugzeugsitz 32a lediglich eine Sitzstellung aufweist.

Die Flugzeugsitzvorrichtung umfasst eine Rückenlehnenaufschlagssicherungsvorrichtung 14a. Die Rückenlehnenaufschlagssicherungsvorrichtung 14a ist dazu vorgesehen, die Rückenlehne 10a in zumindest einem Betriebszustand von dem Sitzbauteil 12a teilweise zu entkoppeln. Durch die teilweise Entkopplung der Rückenlehne 10a von dem Sitzbauteil 12a können in einem Crashfall die Rückenlehne 10a und das Sitzbauteil 12a eine Relativbewegung zueinander ausüben, um so eine Verletzungsgefahr für einen auf dem Flugzeugsitz 32a sitzenden Passagier zu reduzieren. Insbesondere in einem Crashfall mit einer Verzögerung entgegen der Flugrichtung 66a entkoppelt die Rückenlehnenaufschlagssicherungsvorrichtung 14a die Rückenlehne 10a von dem Sitzbauteil 12a. Die Rückenlehnenaufschlagssicherungsvorrichtung 14a reduziert in einem Crashfall die Aufschlagskräfte, die auf die Rückenlehne 10a einwirken, zumindest teilweise, wodurch auch die Kraft auf einen Passagier, der die Kraft auf die Rückenlehne 10a ausübt, reduziert wird. Die Rückenlehne 10a und das als Querversteifungseinheit ausgebildete Sitzbauteil 12a sind mittels der Rückenlehnenaufschlagssicherungsvorrichtung 14a miteinander gekoppelt. Die Rückenlehnenaufschlagssicherungsvorrichtung 14a weist eine Verriegelstellung und eine Entriegelstellung auf. In der Verriegelstellung ist die Rückenlehnenaufschlagssicherungsvorrichtung 14a verriegelt und die Rückenlehne 10a ist fest mit dem Sitzbauteil 12a gekoppelt. In der Verriegelstellung der Rückenlehnenaufschlagssicherungsvorrichtung 14a kann sich die Rückenlehne 10a über die Rückenlehnenaufschlagssicherungsvorrichtung 14a nicht zu dem Sitzbauteil 12a bewegen. In der Entriegelstellung ist die Rückenlehne 10a von dem Sitzbauteil 12a entkoppelt und kann zu dem Sitzbauteil 12a bewegt werden. Dabei kann in der Entriegelstellung der Rückenlehnenaufschlagssicherungsvorrichtung 14a die Rückenlehne 10a zu dem Sitzbauteil 12a um einen vorteilhaften Winkel verschwenkt werden.

Die Rückenlehnenaufschlagssicherungsvorrichtung 14a entkoppelt die Rückenlehne 10a vor einem Einwirken der Aufschlagskräfte auf die Rückenlehne 10a von dem Sitzbauteil 12a. Dadurch wird die Rückenlehne 10a in einem Crashfall von dem Sitzbauteil 12a entkoppelt, bevor ein Passagier auf die Rückenlehne 10a aufschlägt und die Aufschlagskräfte auf die Rückenlehne 10a überträgt. Dadurch ist die Rückenlehne 10a bei einem Auftreffen des Passagiers auf die Rückenlehne 10a, also beim Einwirken der Aufschlagskräfte von dem Sitzbauteil 12a, teilweise entkoppelt und kann so vor oder während des Auftreffens des Passagiers auf die Rückenlehne 10a zu dem Sitzbauteil 12a bewegt werden und so einen Teil der Aufschlagskräfte absorbieren und/oder vorteilhaft ablenken, sodass ein Aufprall auf der Rückenlehne 10a für den Passagier weniger hart ist.

Die Rückenlehnenaufschlagssicherungsvorrichtung 14a umfasst ein Trägheitsmodul 16a. Das Trägheitsmodul 16a ist dazu vorgesehen, die Rückenlehnenaufschlagssicherungsvorrichtung 14a in einem Normalbetriebstand zu verriegeln. Dazu weist das Trägheitsmodul 16a eine Verriegelposition auf. In der Verriegelposition verriegelt das Trägheitsmodul 16a die Rückenlehnenaufschlagssicherungsvorrichtung 14a in der Verriegelstellung. In dem Normalbetriebstand ist die Rückenlehnenaufschlagssicherungsvorrichtung 14a mittels des Trägheitsmoduls 16a in der Verriegelstellung arretiert. Durch das Trägheitsmodul 16a ist die Rückenlehnenaufschlagssicherungsvorrichtung 14a in dem Normalbetriebszustand verriegelt, wodurch die Rückenlehne 10a und das Sitzbauteil 12a über die Rückenlehnenaufschlagssicherungsvorrichtung 14a miteinander fest gekoppelt sind. In einem Crashfall ist das Trägheitsmodul 16a zur Entriegelung der Rückenlehnenaufschlagssicherungsvorrichtung 14a dazu vorgesehen, aus seiner Verriegelposition ausgelenkt zu werden. Dabei ist das Trägheitsmodul 16a dazu vorgesehen, vor dem Einwirken der Aufschlagskräfte aus einer Verriegelposition ausgelenkt zu werden. Ist das Trägheitsmodul 16a aus seiner Verriegelposition ausgelenkt, gibt es die Rückenlehnenaufschlagssicherungsvorrichtung 14a frei und diese gelangt von der Verriegelstellung in die Entriegelstellung. Dazu bildet das Trägheitsmodul 16a einen Massenkörper aus. Der Massenkörper ist dazu vorgesehen, dem Trägheitsmodul 16a eine Masse zu verleihen, die durch ihre Massenträgheit in einem Crashfall das Trägheitsmodul 16a in der Rückenlehnenaufschlagssicherungsvorrichtung 14a aus seiner Verriegelposition auslenkt.

Die Rückenlehnenaufschlagssicherungsvorrichtung 14a umfasst ein Gehäuseelement 20a. Das Gehäuseelement 20a ist dazu vorgesehen, die Rückenlehnenaufschlagssicherungsvorrichtung 14a zu umhausen. Das Gehäuseelement 20a ist als ein Blechbiegeteil ausgebildet. Grundsätzlich ist es auch denkbar, dass das Gehäuseelement 20a auf eine andere, dem Fachmann als sinnvoll erscheinende Weise ausgebildet ist, beispielsweise als ein Fräs- oder Gußteil. Das Gehäuseelement 20a weist einen im Wesentlichen U-förmigen Querschnitt auf. Dabei bildet das Gehäuseelement 20a zwei Seitenbereiche aus, die das Gehäuseelement 20a seitlich begrenzen, sowie einen Mittelbereich, der die beiden Seitenbereiche an einer Oberseite miteinander verbindet. An einer Unterseite ist das Gehäuseelement 20a geöffnet. An einer axialen Vorderseite sowie an einer axialen Rückseite ist das Gehäuseelement 20a ebenfalls geöffnet. Das Gehäuseelement 20a spannt mit seinen Seitenbereichen und seinem Mittelbereich einen Innenraum 56a auf. Das Trägheitsmodul 16a ist axial verschiebbar in dem Gehäuseelement 20a gelagert. Dabei ist das Trägheitsmodul 16a in dem Innenraum 56a angeordnet, den das Gehäuseelement 20a aufspannt. Dazu weist das Gehäuseelement 20a zwei Führungselemente 28a und zwei Führungselemente 50a auf. Die Führungselemente 28a und die Führungselemente 50a sind als Führungsnuten ausgebildet. Je ein als Führungsnut ausgebildetes Führungselement 28a und ein Führungselement 50a ist dabei in einen Seitenbereich des Gehäuseelements 20a eingebracht. Dabei sind die Führungselemente 28a, 50a als Durchgangsnuten ausgebildet. Die Führungselemente 28a auf den gegenüberliegenden Seitenbereichen des Gehäuseelements 20a sind dabei jeweils äquivalent zueinander ausgebildet. Die Führungselemente 50a auf den gegenüberliegenden Seitenbereichen des Gehäuseelements 20a sind dabei jeweils äquivalent zueinander ausgebildet. Dabei sind die Führungselemente 28a in einem vorderen Bereich des Gehäuseelements 20a angeordnet und lagern einen vorderen Bereich des Trägheitsmoduls 16a. Die Führungselemente 50a sind in einem hinteren Bereich des Gehäuseelements 20a angeordnet und lagern einen hinteren Bereich des Trägheitsmoduls 16a. Zur Lagerung des Trägheitsmoduls 16a in den Führungselementen 28a und den Führungselementen 50a umfasst die Rückenlehnenaufschlagssicherungsvorrichtung 14a ein erstes Stiftelement 52a und ein zweites Stiftelement 54a. Die Stiftelemente 52a, 54a sind dabei in einem montierten Zustand in nicht näher dargestellten Aufnahmen des Trägheitsmoduls 16a angeordnet. Dabei greift das erste Stiftelement 52a in montiertem Zustand in die Führungselemente 28a in dem vorderen Bereich des Gehäuseelements 20a ein. Das zweite Stiftelement 54a greift in montiertem Zustand in die Führungselemente 50a im hinteren Bereich des Gehäuseelements 20a ein. Über die zwei Stiftelemente 52a, 54a kann das Trägheitsmodul 16a in Axialrichtung zu dem Gehäuseelement 20a verschoben werden. Über die Anbindung des Trägheitsmoduls 16a über die zwei Stiftelemente 52a, 54a ist das Trägheitsmodul 16a zu dem Gehäuseelement 20a in einer definierten Stellung positioniert. Die Führungselemente 28a, 50a verlaufen in einer Flucht zueinander, wodurch das Trägheitsmodul 16a bei einer Verschiebung über die Stiftelemente 52a, 54a parallel zu dem Gehäuseelement 20a verschoben wird. In montiertem Zustand verlaufen die Führungselemente 28a, 50a im Wesentlichen waagerecht zu der Aufständerebene und in Flugrichtung 66a. An der axialen Rückseite bildet das Gehäuseelement 20a eine Aufnahme 38a aus. Über die Aufnahme 38a ist die Rückenlehne 10a an das Gehäuseelement 20a angebunden. Die Aufnahme 38a bindet die Rückenlehnenaufschlagssicherungsvorrichtung 14a in einem montierten Zustand an die Rückenlehne 10a an. Dabei ist die Rückenlehnenaufschlagssicherungsvorrichtung 14a über die Aufnahme 38a in einem Bereich unterhalb der Lagerstelle 68a, über die die Rückenlehne 10a schwenkbar gelagert ist, an die Rückenlehne 10a angebunden. Die Aufnahme 38a ist von zwei in die beiden Seitenbereiche des Gehäuseelements 20a eingebrachten Durchgangslöchern ausgebildet, die äquivalent zueinander ausgebildet und positioniert sind. Die Rückenlehne 10a ist dabei über ein Verbindungselement, wie beispielsweise eine Schraube, mit der Rückenlehne 10a verbunden.

Die Rückenlehnenaufschlagssicherungsvorrichtung 14a umfasst ein Anbindungselement 18a. Das Anbindungselement 18a ist dazu vorgesehen, mit dem Sitzboden 58a gekoppelt zu werden. Das Anbindungselement 18a bindet die Rückenlehnenaufschlagssicherungsvorrichtung 14a an den Sitzboden 58a an. Das Anbindungselement 18a ist dabei auf dem als Querversteifungseinheit ausgebildeten Sitzbauteil 12a gelagert. Mit einem ersten Ende ist das Anbindungselement 18a mit dem als Querversteifungseinheit ausgebildeten Sitzbauteil 12a verbunden. Dabei ist das Anbindungselement 18a über eine Schweißverbindung mit dem als Querversteifungseinheit ausgebildeten Sitzbauteil 12a verbunden. An einem zweiten Ende ist das Anbindungselement 18a mit der Rückenlehnenaufschlagssicherungsvorrichtung 14a verbunden. Dazu weist die Rückenlehnenaufschlagssicherungsvorrichtung 14a zwei Führungselemente 26a auf. Die Führungselemente 26a sind als Führungsnuten ausgebildet. Je ein als Führungsnut ausgebildetes Führungselement 26a ist dabei in einen Seitenbereich des Gehäuseelements 20a eingebracht. Dabei sind die Führungselemente 26a als Durchgangsnuten ausgebildet. Die Führungselemente 26a auf den gegenüberliegenden Seitenbereichen des Gehäuseelements 20a sind dabei jeweils äquivalent zueinander ausgebildet. Die Führungselemente 26a sind dabei in einem vorderen Bereich des Gehäuseelements 20a angeordnet. Dabei weisen die Führungselemente 26a eine axiale Länge auf, um die sich das Anbindungselement 18a axial zu dem Gehäuseelement 20a verschieben kann. Dabei wird durch eine Länge der Führungselemente 26a ein Winkel definiert, um den die Rückenlehne 10a in einem Crashfall schwenkbar ist. Je länger die Führungselemente 26a sind, um so größer ist ein Winkel, um den sich die Rückenlehne 10a in einem Crashfall verschwenken lässt. Die Rückenlehnenaufschlagssicherungsvorrichtung 14a umfasst einen Bolzen 36a, der das Anbindungselement 18a über die Führungselemente 26a an die Rückenlehnenaufschlagssicherungsvorrichtung 14a anbindet. Der Bolzen 36a ist dabei in den Führungselementen 26a gelagert. Über den Bolzen 36a ist das Anbindungselement 18a, das sich mit einem oberen Bereich in den Innenraum 56a, der von dem Gehäuseelement 20a aufgespannt wird, erstreckt, axial in den Führungselementen 26a des Gehäuseelements 20a verschiebbar. Über den Bolzen 36a ist ebenfalls das Sitzboden 58a an das Anbindungselement 18a und dadurch an die Rückenlehnenaufschlagssicherungsvorrichtung 14a angebunden.

Die Rückenlehnenaufschlagssicherungsvorrichtung 14a umfasst ein Kniegelenk 22a. Das Kniegelenk 22a ist im Normalbetriebszustand dazu vorgesehen, mit dem Trägheitsmodul 16a gekoppelt zu sein. Das Kniegelenk 22a ist mit dem Gehäuseelement 20a und dem Anbindungselement 18a gekoppelt. Dabei ist das Kniegelenk 22a in dem Innenraum 56a angeordnet, den das Gehäuseelement 20a aufspannt. Das Kniegelenk 22a ist dabei unterhalb, also auf einer dem Mittelbereich des Gehäuseelements 20a abgewandten Seite des Trägheitsmoduls 16a, angeordnet. Das Kniegelenk 22a weist einen ersten Gelenkarm 40a und einen zweiten Gelenkarm 42a auf. Die Gelenkarme 40a, 42a sind über ein Stiftelement 44a schwenkbar miteinander gekoppelt. Die Gelenkarme 40a, 42a sind zu einer von dem Stiftelement 44a gebildeten Schwenkachse zueinander schwenkbar. Der erste Gelenkarm 40a ist in einem vorderen Bereich der Rückenlehnenaufschlagssicherungsvorrichtung 14a in dem Gehäuseelement 20a angeordnet. Der erste Gelenkarm 40a ist gelenkig mit dem Gehäuseelement 20a gekoppelt. Der erste Gelenkarm 40a ist an der axialen Vorderseite des Gehäuseelements 20a an das Gehäuseelement 20a angebunden. Dazu weist die Rückenlehnenaufschlagssicherungsvorrichtung 14a ein Lagerelement 46a auf, das in einer Aufnahme des Gehäuseelements 20a angebunden ist. Das Lagerelement 46a ist dabei als ein Stiftelement ausgebildet. Der mit dem ersten Gelenkarm 40a gekoppelte zweite Gelenkarm 42a ist über den Bolzen 36a an das Anbindungselement 18a angebunden. Der zweite Gelenkarm 42a bildet mit seinem mit dem Bolzen 36a verbundenen Ende ein axial verschiebbares Ende des Kniegelenks 22a aus.

Zur Anbindung an das Trägheitsmodul 16a weist das Kniegelenk 22a ein Formschlusselement 24a auf. Das Formschlusselement 24a ist als ein Haken ausgebildet. In der Verriegelstellung der Rückenlehnenaufschlagssicherungsvorrichtung 14a ist das Formschlusselement 24a mit dem Trägheitsmodul 16a verbunden. Das Formschlusselement 24a ist von dem ersten Gelenkarm 40a ausgebildet. Das Formschlusselement 24a ist an einer Oberseite des Gelenkarms 40a angeordnet. Dabei ist das Formschlusselement 24a an einem Ende des Gelenkarms 40a angeordnet, an dem der erste Gelenkarm 40a mit dem zweiten Gelenkarm 42a gekoppelt ist. Das als Haken ausgebildete Formschlusselement 24a ist dabei axial in Richtung des vorderen, mit dem Gehäuseelement 20a verbundenen Endes des ersten Gelenkarms 40a geöffnet. Zur Kopplung mit dem Trägheitsmodul 16a weist das Trägheitsmodul 16a ebenfalls ein Formschlusselement 48a auf. Das Formschlusselement 48a ist von dem Stiftelement 52a gebildet, mit dem das Trägheitsmodul 16a in den Führungselementen 50a des Gehäuseelements 20a gelagert ist.

Das Kniegelenk 22a weist eine Verriegelposition auf, die das Kniegelenk 22a in der Verriegelstellung der Rückenlehnenaufschlagssicherungsvorrichtung 14a einnimmt. In der Verriegelposition des Kniegelenks 22a sind die Gelenkarme 40a, 42a in einer Flucht zueinander angeordnet. In der Verriegelposition des Kniegelenks 22a sind die Gelenkarme 40a, 42a sowie das Lagerelement 46a, der Bolzen 36a und das Stiftelement 44a in einer Flucht angeordnet. Das Formschlusselement 24a ist dabei in der Verriegelposition des Kniegelenks 22a formschlüssig mit dem Formschlusselement 48a des Trägheitsmoduls 16a gekoppelt. Dabei sind die Gelenkarme 40a, 42a des Kniegelenks 22a parallel zu den Führungselementen 26a ausgerichtet. Der Bolzen 36a, der über die Führungselemente 26a axial verschiebbar gelagert ist, ist dabei in der Verriegelposition des Kniegelenks 22a in seiner Verriegelposition an einem hinteren Ende der Führungselemente 26a gesichert. Der Bolzen 36a kann sich in der Verriegelposition des Kniegelenks 22a über die beiden Gelenkarme 40a, 42a an dem Gehäuseelement 20a abstützen. Eine in den Bolzen 36a parallel zu den Führungselementen 26a wirkende Kraft wird über den zweiten Gelenkarm 42a, das Stiftelement 44a, den ersten Gelenkarm 40a und das Lagerelement 46a in das Gehäuseelement 20a eingeleitet.

Die Rückenlehnenaufschlagssicherungsvorrichtung 14a umfasst eine Auslenkeinheit 34a, die dazu vorgesehen ist, das Kniegelenk 22a in einem Crashfall aus der Verriegelposition auszulenken. Die Auslenkeinheit 34a ist dabei dazu vorgesehen, das Kniegelenk 22a bei einer axialen Verschiebung des Trägheitsmoduls 16a aus der Verriegelposition zu bewegen. Dabei ist die Auslenkeinheit 34a dazu vorgesehen, wenigstens einen der Gelenkarme 40a, 42a des Kniegelenks 22a nach unten, von dem Trägheitsmodul 16a weg zu drücken. Die Auslenkeinheit 34a weist eine Betätigungserhebung 60a auf. Die Betätigungserhebung 60a ist von dem zweiten Gelenkarm 42a gebildet. Dabei ist die Betätigungserhebung 60a an einer Oberseite des zweiten Gelenkarms 42a angeordnet. Die Betätigungserhebung 60a ist in einer Verriegelstellung der Rückenlehnenaufschlagssicherungsvorrichtung 14a in einer Ausnehmung 62a in einer Unterseite des Trägheitsmoduls 16a angeordnet. Die Auslenkeinheit 34a umfasst eine Betätigungsfläche 64a. Die Betätigungsfläche 64a ist von der Unterseite des Trägheitsmoduls 16a gebildet und schließt an die Ausnehmung 62a an, in der die Betätigungserhebung 60a in der Verriegelstellung angeordnet ist. Die Betätigungsfläche 64a ist schräg ausgebildet und erstreckt sich von einem Grund der Ausnehmung 62a bis an einen unteren Bereich des Trägheitsmoduls 16a. Die Betätigungsfläche 64a ist dabei dem vorderen Bereich des Gehäuseelements 20a zugewandt. Wird das Trägheitsmodul 16a aus seiner Verriegelposition ausgelenkt, kommt die schräge Betätigungsfläche 64a mit der Betätigungserhebung 60a, die von dem zweiten Gelenkarm 42a gebildet ist, in Kontakt und drückt diese nach unten weg, sodass die Gelenkarme 40a, 42a aus der Flucht zueinander gedrückt werden (vgl. Figur 2). Dadurch können die Gelenkarme 40a, 42a über das Stiftelement 44a zueinander verschwenkt werden und somit kann der Bolzen 36a in den Führungselementen 26a axial verschoben werden. Über die Auslenkeinheit 34a wird das Kniegelenk 22a in einem Crashfall aus seiner Verriegelposition in eine Entriegelposition verschoben.

Die Rückenlehnenaufschlagssicherungsvorrichtung 14a umfasst ein Verzögerungselement 30a. Das Verzögerungselement 30a ist dazu vorgesehen, eine Auslösekraft für die Rückenlehnenaufschlagssicherungsvorrichtung 14a einzustellen. Das Verzögerungselement 30a absorbiert in einem Crashfall zumindest einen Teil von Trägheitskräften, die auf die Rückenlehne 10a einwirken. Das Verzögerungselement 30a ist mit einem ersten Ende fest mit dem Gehäuseelement 20a verbunden. Ein zweites Ende des Verzögerungselements 30a ist fest mit dem axial verschiebbaren Ende des Kniegelenks 22a verbunden. Das Verzögerungselement 30a ist mit seinem zweiten Ende über den Bolzen 36a fest mit dem zweiten Gelenkarm 42a des Kniegelenks 22a und dadurch auch mit dem Anbindungselement 18a verbunden. Dadurch verbindet das Verzögerungselement 30a das Gehäuseelement 20a mit dem axial verschiebbaren Ende des Kniegelenks 22a. Das Verzögerungselement 30a ist als ein Metallstreifen ausgebildet, der in einem Mittelbereich gewellt ausgebildet ist. Bei einer Krafteinwirkung auf das Verzögerungselement 30a in Axialrichtung, also in Haupterstreckungsrichtung des Verzögerungselements 30a, wird das Verzögerungselement 30a gedehnt und umgeformt. Bei dem Umformvorgang wird der gewellte Mittelbereich des als Metallstreifen ausgebildeten Verzögerungselements 30a lang gezogen und eine Wellenform des Mittelbereichs verkleinert. Durch die Umformung des Verzögerungselements 30a werden dabei die Trägheitskräfte, die auf die Rückenlehne 10a wirken, in Umformarbeit umgewandelt und dadurch vernichtet. Das Verzögerungselement 30a weist an seinen Enden jeweils eine Aufnahme auf, über die das Verzögerungselement 30a jeweils an dem Gehäuseelement 20a bzw. dem Bolzen 36a angebunden ist. Dabei hält das Verzögerungselement 30a den Bolzen 36a und dadurch das axial bewegliche Ende des Kniegelenks 22a bis zu einer bestimmten Kraft in einer definierten Position zu dem Gehäuseelement 20a. Das Verzögerungselement 30a weist eine Ausgangsstellung auf, die das Verzögerungselement 30a im Normalbetriebszustand aufweist. In der Ausgangsstellung ist das Verzögerungselement 30a ungedehnt. Dabei ist das Verzögerungselement 30a über den Bolzen 36a an dem Gelenkarm 42a des Kniegelenks 22a befestigt. Das Verzögerungselement 30a dient in einem Crashfall zum Kraftabbau und dabei insbesondere zu einem definierten Aufprall des Passagiers auf der Rückenlehne 10a. Grundsätzlich ist es auch denkbar, dass das Verzögerungselement 30a eine andere Form aufweist, die sich im Falle einer Krafteinwirkung umformt. Grundsätzlich ist es ebenfalls denkbar, dass das Verzögerungselement 30a als ein Hydraulik- oder Gasdruckzylinder ausgebildet ist.

Im Folgenden soll kurz eine Reaktion der Flugzeugsitzvorrichtung mit der Rückenlehnenaufschlagssicherungsvorrichtung 14a in einem Crashfall beschrieben werden. Figur 1 zeigt schematisch die Flugzeugsitzvorrichtung mit der Rückenlehnenaufschlagssicherungsvorrichtung 14a in ihrer Verriegelstellung. Das Trägheitsmodul 16a ist in seiner Verriegelposition an einem hinteren Ende der jeweiligen Führungselemente 28a, 50a, und das Formschlusselement 24a des Kniegelenks 22a greift in das Formschlusselement 48a des Trägheitsmoduls 16a ein, wodurch das Kniegelenk 22a ebenfalls in seiner Verriegelposition gehalten wird. Die Gelenkarme 40a, 42a sind in einer Flucht zueinander ausgerichtet und halten den Bolzen 36a in seiner Verriegelposition an dem hinteren Ende der Führungselemente 26a. Das Sitzbauteil 12a ist über die Rückenlehnenaufschlagssicherungsvorrichtung 14a starr mit der Rückenlehne 10a gekoppelt. Tritt nun in einem Crashfall eine Verzögerung entgegen der Flugrichtung 66a ein, zu der die Rückenlehnenaufschlagssicherungsvorrichtung 14a parallel ausgerichtet ist, wird das mit der Aufständereinheit gekoppelte Gehäuseelement 20a verzögert und das axial in dem Gehäuseelement 20a gelagerte Trägheitsmodul 16a wird durch seine Trägheit aus seiner Verriegelposition ausgelenkt und in Richtung des vorderen Endes des Gehäuseelements 20a verschoben. Dadurch löst sich zunächst das Formschlusselement 48a des Trägheitsmoduls 16a aus dem Formschlusselement 24a des Kniegelenks 22a, wodurch das Kniegelenk 22a von dem Trägheitsmodul 16a entkoppelt wird. Über die Auslenkeinheit 34a wird das Kniegelenk 22a nach unten ausgelenkt und so werden die Gelenkarme 40a, 42a aus einer Flucht zueinander gelenkt. Dabei überfährt das Trägheitsmodul 16a mit der Betätigungsfläche 64a die Betätigungserhebung 60a und lenkt so den zweiten Gelenkarm 42a nach unten aus. Dadurch ist der Bolzen 36a in den Führungselementen 26a freigegeben und der Bolzen 36a kann sich in Axialrichtung zusammen mit dem Anbindungselement 18a in den Führungselementen 26a bewegen (vgl. Figur 2). Die Rückenlehne 10a ist nun zumindest teilweise von dem Sitzbauteil 12a entkoppelt.

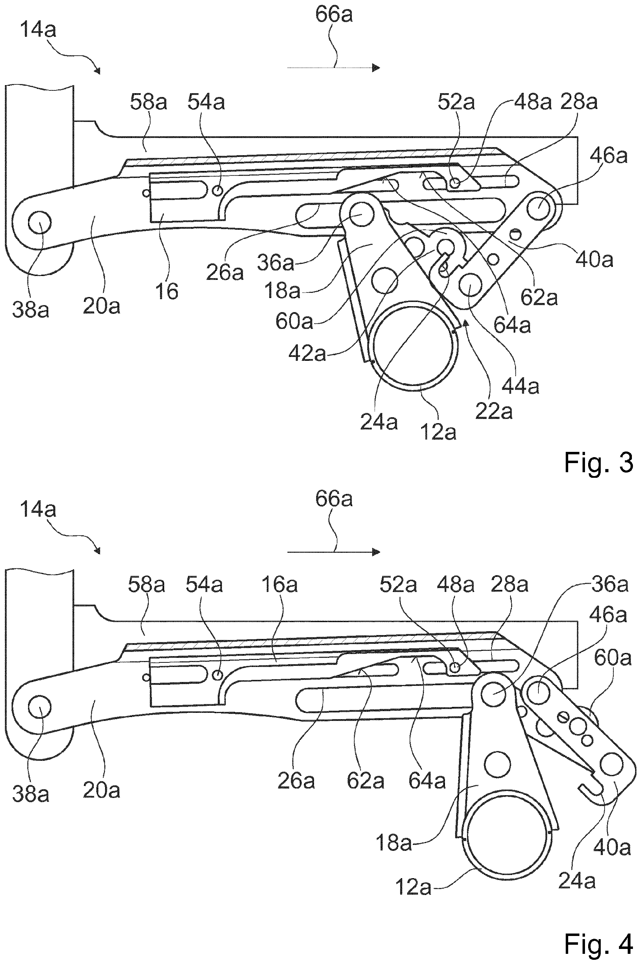

Durch die teilweise Entkopplung der Rückenlehne 10a von dem Sitzbauteil 12a kann sich die Rückenlehne 10a um die Lagerstelle 68a, mittels der die Rückenlehne 10a schwenkbar gelagert ist, drehen. Dabei wird aufgrund einer Massenträgheit in dem Crashfall ein Großteil der Rückenlehne 10a in Richtung der Flugrichtung 66a beschleunigt. Der Großteil der Rückenlehne 10a bewegt sich in dem Crashfall in Richtung der Flugrichtung 66a. Aufgrund der Massenträgheit sowie aufgrund der schwenkbaren Lagerung der Rückenlehne 10a um die Lagerstelle 68a bewegt sich ein unterer Bereich der Rückenlehne 10a entgegen der Flugrichtung 66a. Durch die Trägheit der Rückenlehne 10a wird ein Moment um die Lagerstelle 68a in die Rückenlehne 10a eingeleitet, das ein oberes Ende der Rückenlehne 10a nach vorne drückt. Ein unteres Ende, an dem die Rückenlehnenaufschlagssicherungsvorrichtung 14a an die Rückenlehne 10a angebunden ist, wird entgegen der Flugrichtung 66a bewegt. Dabei wird das Gehäuseelement 20a über die Kopplung mit dem unteren Ende der Rückenlehne 10a nach hinten, entgegen der Flugrichtung 66a, gezogen. Dabei verschiebt sich der Bolzen 36a in den Führungselementen 26a. Das Kniegelenk 22a ist dabei schon in seiner Entriegelposition und die Gelenkarme 40a, 42a können über das Stiftelement 44a frei zueinander verschwenkt werden und setzen der Bewegung des Bolzens 36a in den Führungselementen 26a keine Kraft entgegen. Dabei wird der Sitzboden 58a ebenfalls entgegen der Flugrichtung 66a bewegt. Durch das Verzögerungselement 30a, das der Bewegung des Gehäuseelements 20a entgegenwirkt, wird die Bewegung der Rückenlehne 10a und damit auch eine Bewegung des Sitzbodens 58a entgegen der Flugrichtung 66a abgebremst. Eine Stellung der Rückenlehnenaufschlagssicherungsvorrichtung 14a während eines Crashfalls ist dabei in Figur 3 gezeigt. Figur 4 zeigt eine maximale Verschiebung des Gehäuseelements 20a zu dem Bolzen 36a und dem Anbindungselement 18a.

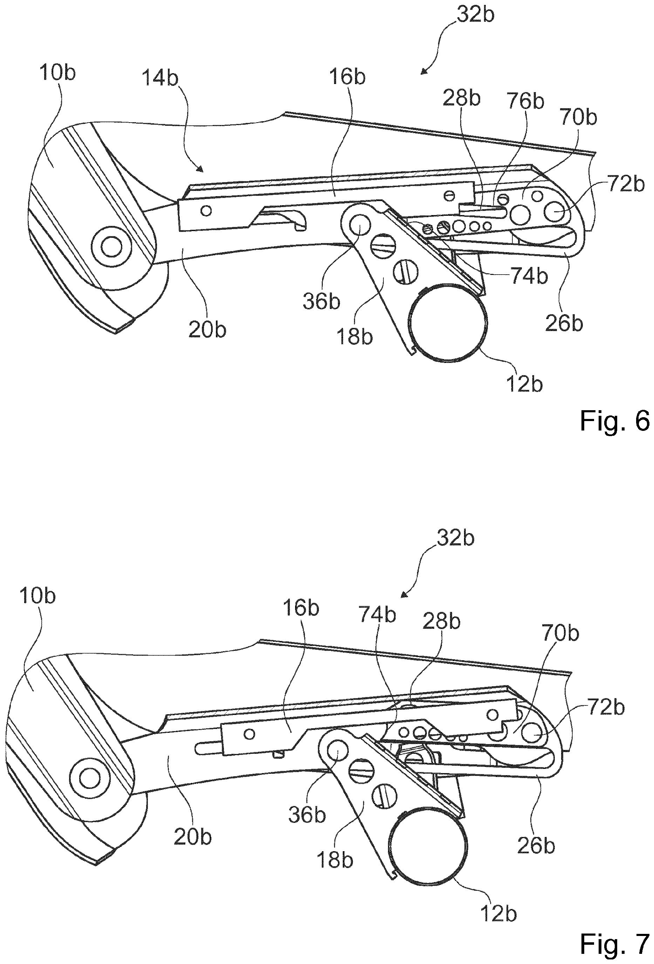

In den Figuren 6 bis 21 sind acht weitere Ausführungsbeispiele der Erfindung gezeigt. Die nachfolgenden Beschreibungen und die Zeichnungen beschränken sich im Wesentlichen auf die jeweiligen Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels der Figuren 1 bis 5 verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 bis 21 ist der Buchstabe a durch die Buchstaben b - i ersetzt.

Die Figuren 6 und 7 zeigen eine erfindungsgemäße Flugzeugsitzvorrichtung in einem zweiten Ausführungsbeispiel. Die Flugzeugsitzvorrichtung ist dabei Teil eines teilweise dargestellten Flugzeugsitzes 32b. Die Flugzeugsitzvorrichtung umfasst eine Rückenlehne 10b. Die Rückenlehne 10b ist dabei dazu vorgesehen, dass eine Person, die auf dem Flugzeugsitz 32b sitzt, dessen Teil die Flugzeugsitzvorrichtung ist, ihren Rücken an der Rückenlehne 10b abstützen kann. Die Flugzeugsitzvorrichtung umfasst weiter ein Sitzbauteil 12b. Die Flugzeugsitzvorrichtung umfasst eine Rückenlehnenaufschlagssicherungsvorrichtung 14b. Die Rückenlehnenaufschlagssicherungsvorrichtung 14b ist dazu vorgesehen, die Rückenlehne 10b in zumindest einem Betriebszustand von dem Sitzbauteil 12b teilweise zu entkoppeln. Die Rückenlehnenaufschlagssicherungsvorrichtung 14b umfasst ein Trägheitsmodul 16b und ein Gehäuseelement 20b, in dem das Trägheitsmodul 16b axial verschiebbar gelagert ist. Dabei ist das Trägheitsmodul 16b wie das Trägheitsmodul aus dem ersten Ausführungsbeispiel dazu vorgesehen, bei einem Crashfall aus einer Verriegelposition ausgelenkt zu werden. Das Gehäuseelement 20b ist im Wesentlichen gleich ausgebildet wie das Gehäuseelement aus dem ersten Ausführungsbeispiel. Die Rückenlehnenaufschlagssicherungsvorrichtung 14b umfasst ein Anbindungselement 18b. Das Anbindungselement 18b ist dazu vorgesehen, mit dem Sitzbauteil 12b gekoppelt zu werden. Das Anbindungselement 18b bindet die Rückenlehnenaufschlagssicherungsvorrichtung 14b an das Sitzbauteil 12b an. Das Anbindungselement 18b ist mit der Rückenlehnenaufschlagssicherungsvorrichtung 14b verbunden. Dazu weist die Rückenlehnenaufschlagssicherungsvorrichtung 14b zwei Führungselemente 26b auf. Die Führungselemente 26b sind als Führungsnuten ausgebildet. Die Rückenlehnenaufschlagssicherungsvorrichtung 14b umfasst einen Bolzen 36b, der das Anbindungselement 18b über die Führungselemente 26b an die Rückenlehnenaufschlagssicherungsvorrichtung 14b anbindet. Der Bolzen 36b ist dabei in den Führungselementen 26b gelagert.

Im Unterschied zu dem ersten Ausführungsbeispiel umfasst die Rückenlehnenaufschlagssicherungsvorrichtung 14b ein Sperrelement 70b. Das Sperrelement 70b ist in einem vorderen Bereich des Gehäuseelements 20b über ein Stiftelement 72b schwenkbar gelagert. Das Sperrelement 70b weist eine Verriegelposition auf (Figur 6). In der Verriegelposition sperrt das Sperrelement 70b mit einem Formschlusselement 74b den Bolzen 36b in seiner Verriegelposition. Das Formschlusselement 74b ist dabei an einem vorderen freien Ende des Sperrelements 70b angeordnet. Das Sperrelement 70b weist ein Führungselement 76b auf. Das Führungselement 76b ist als eine Nut ausgebildet. Das Führungselement 76b des Sperrelements 70b ist mit einem nicht näher dargestellten Stiftelement des Trägheitsmoduls 16b gekoppelt. Das Führungselement 76b des Sperrelements 70b ist dabei schräg zu Führungselementen 28b ausgerichtet, über die das Trägheitsmodul 16b in dem Gehäuseelement 20b gelagert ist. Bei einer axialen Verschiebung des Trägheitsmoduls 16b in den Führungselementen 28b zu dem Gehäuseelement 20b verschiebt sich das Stiftelement des Trägheitsmoduls 16b in dem Führungselement 76b des Sperrelements 70b. Dadurch wird das Sperrelement 70b mit dem vorderen freien Ende zu dem Gehäuseelement 20b verschwenkt. Dadurch gibt das Sperrelement 70b den Bolzen 36b frei und dieser kann in den Führungselementen 26b, in denen der Bolzen 36b verschiebbar gelagert ist, verschoben werden. Eine weitere Reaktion der Flugzeugsitzvorrichtung und insbesondere der Rückenlehnenaufschlagssicherungsvorrichtung 14b in einem Crashfall erfolgt dabei im Wesentlichen gleich zu dem ersten Ausführungsbeispiel.

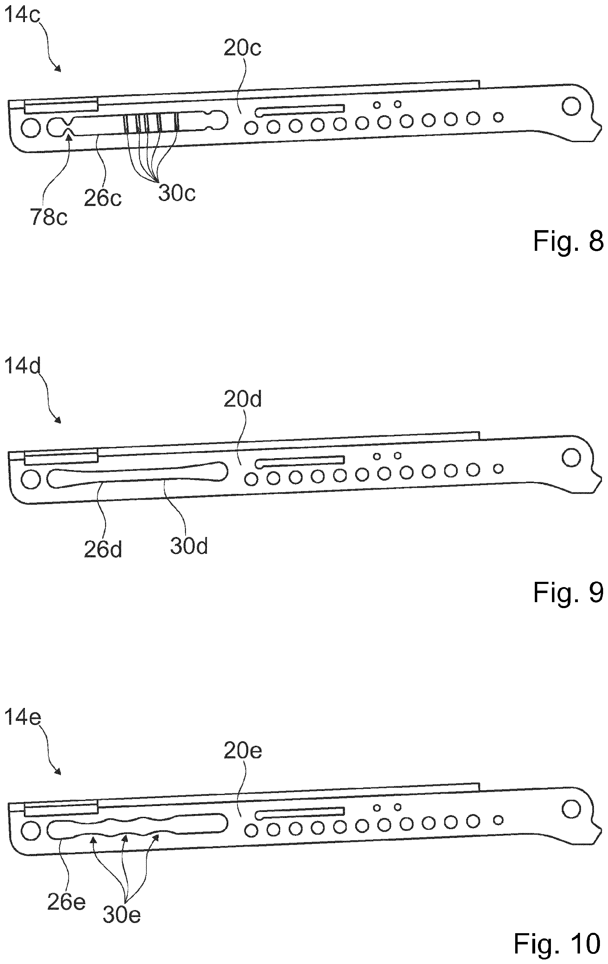

Figur 8 zeigt einen Teil einer erfindungsgemäßen Flugzeugsitzvorrichtung in einem dritten Ausführungsbeispiel. Die Flugzeugsitzvorrichtung umfasst eine Rückenlehnenaufschlagssicherungsvorrichtung 14c. Die Rückenlehnenaufschlagssicherungsvorrichtung 14c ist dazu vorgesehen, eine Rückenlehne in zumindest einem Betriebszustand von einem Sitzbauteil teilweise zu entkoppeln. Dabei zeigt die Figur 8 lediglich ein Gehäuseelement 20c der Rückenlehnenaufschlagssicherungsvorrichtung 14c in einer Schnittansicht. Die Rückenlehnenaufschlagssicherungsvorrichtung 14c umfasst mehrere Verzögerungselemente 30c. Im Gegensatz zu den anderen Ausführungsbeispielen unterscheiden sich lediglich die Verzögerungselemente 30c von den Verzögerungselementen der anderen Ausführungsbeispiele. Die Verzögerungselemente 30c sind jeweils als ein Steg ausgebildet, der ein als Nut ausgebildetes Führungselement 26c überspannt. Die als Steg ausgebildeten Verzögerungselemente 30c erstrecken sich quer zu einer Haupterstreckungsrichtung des Führungselements 26c und verbinden eine Seite des als Nut ausgebildeten Führungselements 26c mit einer gegenüberliegenden Seite des Führungselements 26c. Die Verzögerungselemente 30c sind jeweils beabstandet zueinander angeordnet. Ein in dem Führungselement 26c axial verschiebbar gelagerter, nicht näher dargestellter Bolzen, der das Gehäuseelement 20c mit dem Sitzbauteil koppelt, muss zum Verfahren in dem Führungselement 26c die Verzögerungselemente 30c zerstören, wodurch Energie abgebaut und und der Bolzen und damit die daran gekoppelte Rückenlehne durch die Verzögerungselemente 30c verzögert werden. Dabei ist es denkbar, dass die mehreren Verzögerungselemente 30c unterschiedliche Widerstände gegen eine Zerstörung aufweisen und somit ein definierter Kraftabbau, also eine definierte Verzögerung, erreicht werden kann. Zur Sicherung des nicht näher dargestellten Bolzens in einer Ruhestellung weist die Rückenlehnenaufschlagssicherungsvorrichtung 14c zwei Halteelemente 78c auf, die an einem ersten Ende des als Nut ausgebildeten Führungselements 26c angeordnet sind. Die Halteelemente 78c sind dabei als Haken ausgebildet, die nach innen in das als Nut ausgebildete Führungselement 26c hineinragen. Zur Verschiebung in dem als Nut ausgebildeten Führungselement 26c muss der Bolzen die Halteelemente 78c zunächst zerstören.

Figur 9 zeigt einen Teil einer erfindungsgemäßen Flugzeugsitzvorrichtung in einem vierten Ausführungsbeispiel. Die Flugzeugsitzvorrichtung umfasst eine Rückenlehnenaufschlagssicherungsvorrichtung 14d. Die Rückenlehnenaufschlagssicherungsvorrichtung 14d ist dazu vorgesehen, eine Rückenlehne in zumindest einem Betriebszustand von einem Sitzbauteil teilweise zu entkoppeln. Dabei zeigt die Figur 9 lediglich ein Gehäuseelement 20d der Rückenlehnenaufschlagssicherungsvorrichtung 14d in einer Schnittansicht. Die Rückenlehnenaufschlagssicherungsvorrichtung 14d umfasst ein Verzögerungselement 30d. Im Gegensatz zu den anderen Ausführungsbeispielen unterscheidet sich lediglich das Verzögerungselement 30d von den Verzögerungselementen der anderen Ausführungsbeispiele. Dabei ist das Verzögerungselement 30d einstückig mit einem als Nut ausgebildeten Führungselement 26d ausgebildet, in dem ein Bolzen zur Anbindung eines als Querversteifungseinheit ausgebildeten Sitzbauteils axial verschiebbar gelagert ist. Dabei ist das Führungselement 26d, das das Verzögerungselement 30c ausbildet, verjüngend ausgebildet. Das Führungselement 26d weist in einer Richtung, in die sich der Bolzen in einem Crashfall verschiebt, eine Verjüngung auf, wobei das Führungselement 26d dabei eine Breite aufweist, die kleiner ist als eine Breite des Bolzens. Der Bolzen muss dabei zur axialen Verschiebung in dem Führungselement 26d das Führungselement 26d, welches das Verzögerungselement 30d einstückig ausbildet, aufweiten. Durch die plastische Verformung des Führungselements 26d, das das Verzögerungselement 30d ausbildet, wird Energie abgebaut und der Bolzen dabei verzögert.

Figur 10 zeigt einen Teil einer erfindungsgemäßen Flugzeugsitzvorrichtung in einem fünften Ausführungsbeispiel. Die Flugzeugsitzvorrichtung umfasst eine Rückenlehnenaufschlagssicherungsvorrichtung 14e. Die Rückenlehnenaufschlagssicherungsvorrichtung 14e ist dazu vorgesehen, eine Rückenlehne in zumindest einem Betriebszustand von einem Sitzbauteil teilweise zu entkoppeln. Dabei zeigt die Figur 10 lediglich ein Gehäuseelement 20e der Rückenlehnenaufschlagssicherungsvorrichtung 14e in einer Schnittansicht. Die Rückenlehnenaufschlagssicherungsvorrichtung 14e umfasst mehrere Verzögerungselemente 30e. Dabei unterscheiden sich lediglich die Verzögerungselemente 30e von den Verzögerungselementen der anderen Ausführungsbeispiele. Die Verzögerungselemente 30e sind als Verjüngungen eines als Nut ausgebildeten Führungselements 26e ausgebildet. Im Bereich der Verzögerungselemente 30e erstrecken sich Seitenkanten des als Nut ausgebildeten Führungselements 26e jeweils nach innen, aufeinander zu. Dadurch wird im Bereich der Verzögerungselemente 30e das als Nut ausgebildete Führungselement 26e jeweils verengt. Ein in dem Führungselement 26e beweglich gelagerter Bolzen muss, um in dem als Nut ausgebildeten Führungselement 26e verschoben werden zu können, die als Verjüngungen ausgebildeten Verzögerungselemente 30e aufbiegen, wodurch eine Bewegungsenergie in Verformungsenergie abgebaut werden kann.

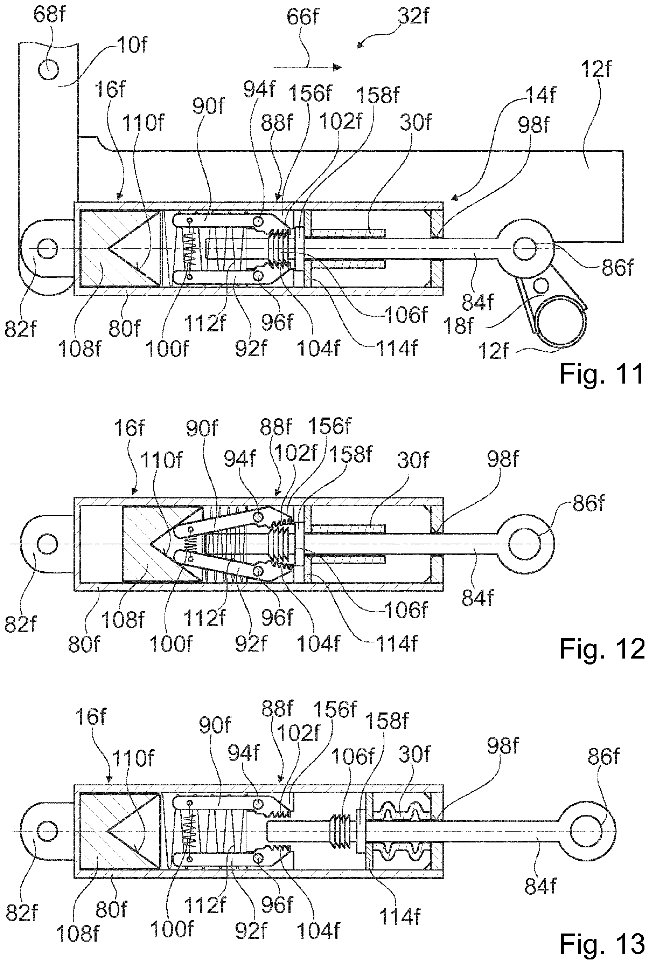

Die Figuren 11 bis 13 zeigen eine erfindungsgemäße Flugzeugsitzvorrichtung in einem sechsten Ausführungsbeispiel. Die Flugzeugsitzvorrichtung ist dabei Teil eines teilweise dargestellten Flugzeugsitzes 32f. Der Flugzeugsitz 32f ist dabei Teil eines nicht näher dargestellten Flugzeugs. Der Flugzeugsitz 32f ist dabei in einem montierten Zustand in einer Flugzeugkabine des Flugzeugs aufgeständert. Dazu weist der Flugzeugsitz 32f eine Aufständereinheit auf. Mittels der Aufständereinheit ist der Flugzeugsitz 32f auf einem Kabinenboden der Flugzeugkabine aufgeständert. Der Kabinenboden bildet eine Aufständerebene für den Flugzeugsitz 32f aus. Der Flugzeugsitz 32f ist dabei als ein Teil einer Sitzreihe ausgebildet, die mehr als einen Flugzeugsitz 32f, vorzugsweise zumindest drei Flugzeugsitze 32f, umfasst. Der Flugzeugsitz 32f bildet dabei eine Sitzrichtung aus. Die Sitzrichtung ist als die Richtung definiert, in der ein Passagier auf dem Flugzeugsitz 32f sitzt. Dabei ist die Sitzrichtung parallel zu einer Flugrichtung 66f ausgebildet. Die Flugrichtung 66f ist dabei von einer Haupterstreckung der Flugzeugkabine gebildet. Die Aufständereinheit ist dabei als eine gemeinsame Aufständereinheit der Flugzeugsitze 32f der Flugzeugsitzreihe ausgebildet. Die Flugzeugsitzvorrichtung umfasst eine Rückenlehne 10f. Die Rückenlehne 10f ist dabei dazu vorgesehen, dass eine Person, die auf dem Flugzeugsitz 32f, dessen Teil die Flugzeugsitzvorrichtung ist, sitzt, ihren Rücken an der Rückenlehne 10f abstützen kann. Die Rückenlehne 10f ist schwenkbar zu der Aufständereinheit angeordnet. Die Rückenlehne 10f ist dabei an einem nicht näher dargestellten Sitzteiler über eine Lagerstelle 68f schwenkbar angelenkt. Die Flugzeugsitzvorrichtung umfasst weiter ein Sitzbauteil 12f. Das Sitzbauteil 12f ist als eine Querversteifungseinheit ausgebildet, die dazu vorgesehen ist, die Rückenlehne 10f in der Querversteifungseinheitenquerrichtung zu versteifen. Zudem ist das als Querversteifungseinheit ausgebildete Sitzbauteil 12f dazu vorgesehen, die eine Seite des Flugzeugsitzes 32f, dessen Teil die Flugzeugsitzvorrichtung ist, mit der weiteren Seite des Flugzeugsitzes 32f zu verbinden. Das als Querversteifungseinheit ausgebildete Sitzbauteil 12f erstreckt sich dabei zwischen den nicht näher dargestellten Sitzteilern des Flugzeugsitzes 32f. Das als Querversteifungseinheit ausgebildete Sitzbauteil 12f ist drehbar in den nicht näher dargestellten Sitzteilern gelagert. Das als Querversteifungseinheit ausgebildete Sitzbauteil 12f ist dazu vorgesehen, bei der Bewegung der Rückenlehne 10f gedreht zu werden. Das als Querversteifungseinheit ausgebildete Sitzbauteil 12f ist als ein Torsionselement ausgebildet. Im vorliegenden Ausführungsbeispiel ist das als Querversteifungseinheit ausgebildete Sitzbauteil 12f als ein Torsionsrohr ausgebildet. Ferner weist die Flugzeugsitzvorrichtung einen Sitzboden 58f auf. Grundsätzlich ist es auch denkbar, dass das Sitzbauteil 12f als ein Sitzboden oder ein Bauteil der Sitzstruktur ausgebildet ist. Der Sitzboden 58f bildet eine Sitzfläche aus. Der Sitzboden 58f ist mit der Rückenlehne 10f gekoppelt. Dabei sind die Rückenlehne 10f und der Sitzboden 58f gelenkig miteinander verbunden. Über eine nicht näher dargestellte Kinematik der Flugzeugsitzvorrichtung sind die Rückenlehne 10f und der Sitzboden 58f schwenkbar miteinander gekoppelt. Dabei sind die Rückenlehne 10f und der Sitzboden 58f in verschiedenen Stellungen zueinander verschiebbar und können in diesen verschiedenen Stellungen fixiert werden. Dabei sind die Rückenlehne 10f und der Sitzboden 58f vorzugsweise stufenlos zueinander verschiebbar. Grundsätzlich ist es auch denkbar, dass die Rückenlehne 10f in einem Normalbetriebszustand starr mit dem Sitzboden 58f oder einer Sitzstruktur verbunden ist und der Flugzeugsitz 32f lediglich eine Sitzstellung aufweist.

Die Flugzeugsitzvorrichtung umfasst eine Rückenlehnenaufschlagssicherungsvorrichtung 14f. Die Rückenlehnenaufschlagssicherungsvorrichtung 14f ist zumindest in einem Normalbetriebszustand dazu vorgesehen, die Rückenlehne 10f und das Sitzbauteil 12f in einer Verriegelstellung starr zu verbinden. In dem Normalbetriebszustand, der einen normalen und ordnungsgemäßen Gebrauch des Flugzeugsitzes 32f abbildet, können Kräfte über die Rückenlehnenaufschlagssicherungsvorrichtung 14f von der Rückenlehne 10f in das Sitzbauteil 12f übertragen werden. In dem Normalbetriebszustand, in dem die Rückenlehnenaufschlagssicherungsvorrichtung 14f die Rückenlehne 10f und das Sitzbauteil 12f in der Verriegelstellung starr verbindet, können Kräfte nach vorne, also in Flugrichtung 66 und entgegen der Flugrichtung 66, übertragen werden. Die Rückenlehnenaufschlagssicherungsvorrichtung 14f ist dazu vorgesehen, die Rückenlehne 10f in zumindest einem Betriebszustand von dem Sitzbauteil 12f teilweise zu entkoppeln. Durch die teilweise Entkopplung der Rückenlehne 10f von dem Sitzbauteil 12f können in einem Crashfall die Rückenlehne 10f und das Sitzbauteil 12f eine Relativbewegung zueinander ausüben, um so eine Verletzungsgefahr für einen auf dem Flugzeugsitz 32f sitzenden Passagier zu reduzieren. Insbesondere in einem Crashfall mit einer Verzögerung entgegen der Flugrichtung 66f entkoppelt die Rückenlehnenaufschlagssicherungsvorrichtung 14f die Rückenlehne 10f von dem Sitzbauteil 12f. Die Rückenlehnenaufschlagssicherungsvorrichtung 14f reduziert in einem Crashfall die Aufschlagskräfte, die auf die Rückenlehne 10f einwirken, zumindest teilweise, wodurch auch die Kraft auf einen Passagier, der die Kraft auf die Rückenlehne 10f ausübt, reduziert wird. Die Rückenlehne 10f und das als Querversteifungseinheit ausgebildete Sitzbauteil 12f sind mittels der Rückenlehnenaufschlagssicherungsvorrichtung 14f miteinander gekoppelt. Die Rückenlehnenaufschlagssicherungsvorrichtung 14f weist eine Verriegelstellung und eine Entriegelstellung auf. In der Verriegelstellung ist die Rückenlehnenaufschlagssicherungsvorrichtung 14f verriegelt und die Rückenlehne 10f ist fest mit dem Sitzbauteil 12f gekoppelt. In der Verriegelstellung der Rückenlehnenaufschlagssicherungsvorrichtung 14f kann sich die Rückenlehne 10f über die Rückenlehnenaufschlagssicherungsvorrichtung 14f nicht zu dem Sitzbauteil 12f bewegen. In der Entriegelstellung ist die Rückenlehne 10f von dem Sitzbauteil 12f entkoppelt und kann zu dem Sitzbauteil 12f bewegt werden. Dabei kann in der Entriegelstellung der Rückenlehnenaufschlagssicherungsvorrichtung 14f die Rückenlehne 10f zu dem Sitzbauteil 12f um einen vorteilhaften Winkel verschwenkt werden.

Die Rückenlehnenaufschlagssicherungsvorrichtung 14f entkoppelt die Rückenlehne 10f vor einem Einwirken der Aufschlagskräfte auf die Rückenlehne 10f von dem Sitzbauteil 12f. Dadurch wird die Rückenlehne 10f in einem Crashfall von dem Sitzbauteil 12f entkoppelt, bevor ein Passagier auf die Rückenlehne 10f aufschlägt und die Aufschlagskräfte auf die Rückenlehne 10f überträgt. Dadurch ist die Rückenlehne 10f bei einem Auftreffen des Passagiers auf die Rückenlehne 10f, also beim Einwirken der Aufschlagskräfte von dem Sitzbauteil 12f, teilweise entkoppelt und kann so vor oder während des Auftreffens des Passagiers auf die Rückenlehne 10f zu dem Sitzbauteil 12f bewegt werden und so einen Teil der Aufschlagskräfte absorbieren und/oder vorteilhaft ablenken, sodass ein Aufprall auf der Rückenlehne 10f für den Passagier weniger hart ist.

Die Rückenlehne 10f ist dazu vorgesehen, nach der teilweisen Entkopplung wieder in einer Verriegelstellung verriegelt zu werden. Dadurch kann die Rückenlehne 10f nach der teilweisen Entkopplung und der dabei vollzogenen Bewegung zu dem Sitzbauteil 12f wieder in der Verriegelstellung verriegelt werden. Die Verriegelstellung kann dabei dieselbe sein, in der die Rückenlehne 10f in dem Normalbetriebszustand verriegelt ist, es ist aber auch denkbar, dass die Verriegelstellung, in der die Rückenlehne 10f nach der teilweisen Entkopplung wieder verriegelt wird, von der Verriegelstellung in dem Normalbetriebszustand unterschiedlich ist. Dadurch kann die Rückenlehne 10f nach einer Verstellung aus der Verriegelstellung in dem Crashfall von einem Passagier wieder in der Verriegelstellung gesichert werden, um so einen sicheren Fluchtweg zu ermöglichen, in dem die Rückenlehne 10f nicht im Weg ist. Des Weiteren können nach der Verriegelung der Rückenlehne 10f vorteilhaft wieder Handhold-Lasten über die verriegelte Rückenlehne 10f in die Aufständereinheit des Flugzeugsitzes 32f eingeleitet werden, wodurch sich ein Passagier vorteilhaft an der Rückenlehne 10f festhalten kann, ohne dass diese verschwenkt. Die Rückenlehnenaufschlagssicherungsvorrichtung 14f ist dazu vorgesehen, nach der teilweisen Entkopplung wieder in eine Verriegelstellung gebracht zu werden und dadurch die Rückenlehne 10f nach der teilweisen Entkopplung wieder in der Verriegelstellung zu verriegeln. Grundsätzlich wäre es auch denkbar, dass die Flugzeugsitzvorrichtung eine separat zu der Rückenlehnenaufschlagssicherungsvorrichtung 14f ausgebildete Vorrichtung aufweist, die dazu vorgesehen ist, die Rückenlehne 10f nach der teilweisen Entkopplung wieder in eine Verriegelstellung zu bringen. Es ist dabei denkbar, dass die separat ausgebildete Vorrichtung auf eine ähnliche Weise aufgebaut ist und funktioniert wie die im Folgenden beschriebene Rückenlehnenaufschlagssicherungsvorrichtung 14f. Grundsätzlich ist es auch denkbar, dass die separat ausgebildete Vorrichtung lediglich die gleiche Wirkung hat wie die im Folgenden beschriebene Rückenlehnenaufschlagssicherungsvorrichtung 14f, aber dass sich ihr Aufbau unterscheidet.

Die Rückenlehnenaufschlagssicherungsvorrichtung 14f umfasst ein Gehäuse 80f. Das Gehäuse 80f ist dazu vorgesehen, die Rückenlehnenaufschlagssicherungsvorrichtung 14f zu umhausen. Das Gehäuse 80f ist als ein geschlossenes Gehäuse ausgebildet. Das Gehäuse 80f ist als ein Zylinder ausgebildet. Das als Zylinder ausgebildete Gehäuse 80f weist eine Mittelachse auf, die einer Haupterstreckungsrichtung des Gehäuses 80f entspricht. Das Gehäuse 80f schließt einen Innenraum ein. Dabei umschließt das Gehäuse 80f in einem montierten Zustand den gesamten Innenraum. Dadurch kann ein Eindringen von Flüssigkeiten oder Schmutz in den Innenraum des Gehäuses 80f vorteilhaft verhindert werden und so eine Zuverlässigkeit der Rückenlehnenaufschlagssicherungsvorrichtung 14f verbessert werden kann. Grundsätzlich ist es aber auch denkbar, dass das Gehäuse 80f zumindest teilweise geöffnet ausgebildet ist. Das Gehäuse 80f umfasst ein Anbindungselement 82f. Das Anbindungselement 82f ist als ein Formschlusselement ausgebildet und zur starren Verbindung mit einem äquivalent ausgebildeten Anbindungselement vorgesehen. Das Anbindungselement 82f ist an einem ersten axialen Ende des Gehäuses 80f angeordnet und bildet damit ein erstes axiales Ende der Rückenlehnenaufschlagssicherungsvorrichtung 14f aus. Über das Anbindungselement 82f ist das Gehäuse 80f mit der Rückenlehne 10f starr verbindbar. In einem montierten Zustand ist die Rückenlehnenaufschlagssicherungsvorrichtung 14f über das Anbindungselement 82f des Gehäuses 80f mit der Rückenlehne 10f verbunden. Die Rückenlehnenaufschlagssicherungsvorrichtung 14f umfasst ein Element 84f, das axial verschiebbar in dem Gehäuse 80f gelagert ist. Das Element 84f ist als ein Kolbenelement ausgebildet. Das als Kolbenelement ausgebildete Element 84f erstreckt sich in montiertem Zustand in dem Innenraum des Gehäuses 80f. Ein erstes axiales Ende des Elements 84f ist in montiertem Zustand dem ersten axialen Ende des Gehäuses 80f zugewandt. Mit dem ersten axialen Ende erstreckt sich das Element 84f von einem zweiten axialen Ende des Gehäuses 80f bis über eine Mitte zwischen dem ersten Ende und dem zweiten Ende des Gehäuses 80f hinaus. Das Element 84f ist zumindest im Wesentlichen rotationssymmetrisch ausgebildet und weist eine Mittelachse auf. Dabei ist wenigstens ein in dem Gehäuse 80f angeordneter Bereich des Elements 84f rotationssymmetrisch ausgebildet. Die Mittelachse des Elements 84f ist in montiertem Zustand koaxial zu der Mittelachse des Gehäuses 80f ausgerichtet. An dem zweiten axialen Ende des Gehäuses 80f, das dem ersten axialen Ende des Gehäuses 80f gegenüberliegt, ragt das Element 84f aus dem Gehäuse 80f heraus. Dazu weist das Gehäuse 80f an dem zweiten axialen Ende eine Durchgangsöffnung 98f auf. Das Element 84f umfasst ein Anbindungselement 86f. Das Anbindungselement 86f ist als ein Formschlusselement ausgebildet und zur starren Verbindung mit einem äquivalent ausgebildeten Anbindungselement vorgesehen. Über das Anbindungselement 86f ist das Element 84f mit dem Sitzbauteil 12f starr verbindbar. In einem montierten Zustand ist die Rückenlehnenaufschlagssicherungsvorrichtung 14f über das Anbindungselement 86f des Elements 84f mit dem Sitzbauteil 12f verbunden. Das Anbindungselement 86f ist an einem zweiten axialen Ende des Elements 84f angeordnet. Das Anbindungselement 86f bildet dadurch ein zweites axiales Ende der Rückenlehnenaufschlagssicherungsvorrichtung 14f aus. Die Rückenlehnenaufschlagssicherungsvorrichtung 14f weist einen Anschlag 156f auf. Der Anschlag 156f ist dazu vorgesehen, das Element 84f auf eine Maximalstellung in dem Gehäuse 80f zu begrenzen. Der Anschlag 156f ist von Erhebungen ausgebildet, die sich in dem Innenraum des Gehäuses 80f nach innen erheben. Der Anschlag 156f begrenzt eine Bewegung des Elements 84f in dem Gehäuse 80f in Richtung des ersten axialen Endes des Gehäuses 80f. In der Verriegelstellung schlägt das Element 84f an dem Anschlag 156f an. Zur Kontaktierung mit dem Anschlag 156f weist das Element 84f eine Erhebung 158f auf, die in der Verriegelstellung an den Anschlag 156f anschlägt.

Die Rückenlehnenaufschlagssicherungsvorrichtung 14f weist eine Verriegelstellung und eine Entriegelstellung auf. Grundsätzlich ist es auch denkbar, dass die Rückenlehnenaufschlagssicherungsvorrichtung 14f zumindest zwei Verriegelstellungen aufweist, die sich voneinander unterscheiden. In der Verriegelstellung der Rückenlehnenaufschlagssicherungsvorrichtung 14f ist das in dem Gehäuse 80f axial verschiebbar gelagerte Element 84f starr mit dem Gehäuse 80f verbunden. Das Element 84f kann in der Verriegelstellung der Rückenlehnenaufschlagssicherungsvorrichtung 14f nicht in dem Gehäuse 80f verschoben werden. In der Entriegelstellung der Rückenlehnenaufschlagssicherungsvorrichtung 14f kann das in dem Gehäuse 80f axial verschiebbar gelagerte Element 84f um einen definierten Verfahrweg verfahren. Dabei kann das Element 84f aus der Verriegelstellung der Rückenlehnenaufschlagssicherungsvorrichtung 14f in eine Auslöserichtung bewegt werden, die von dem Anbindungselement 82f des Gehäuses 80f weggerichtet ist. Dadurch kann die Rückenlehnenaufschlagssicherungsvorrichtung 14f durch eine Verschiebung des Elements 84f aus der Verriegelstellung heraus verlängert werden. Durch ein Verschieben des Elements 84f aus der Verriegelstellung heraus in der Auslöserichtung wird ein Abstand zwischen dem Anbindungselement 82f des Gehäuses 80f und dem Anbindungselement 86f des Elements 84f erhöht.

Die Rückenlehnenaufschlagssicherungsvorrichtung 14f weist wenigstens ein Verriegelungsmodul 88f auf, das in einer Verriegelstellung die Rückenlehnenaufschlagssicherungsvorrichtung 14f sperrt. In der Entriegelstellung entkoppelt das Verriegelungsmodul 88f die Rückenlehnenaufschlagssicherungsvorrichtung 14f zumindest teilweise. Die Rückenlehnenaufschlagssicherungsvorrichtung 14f ist mittels des Verriegelungsmoduls 88f von der Entriegelstellung in die Verriegelstellung überführbar. Das Gehäuse 80f und das axial verschiebbar gelagerte Element 84f sind in der Verriegelstellung der Rückenlehnenaufschlagssicherungsvorrichtung 14f über das Verriegelungsmodul 88f miteinander gekoppelt. Das Verriegelungsmodul 88f weist zwei gegen eine elastische Kraft auslenkbare Verriegelelemente 90f, 92f auf. Die Verriegelelemente 90f, 92f sind als verschwenkbare Hebelelemente ausgebildet. Die Verriegelelemente 90f, 92f sind in dem Innenraum des Gehäuses 80f angeordnet. Die Verriegelelemente 90f, 92f sind als längliche Hebelelemente ausgebildet, die eine Haupterstreckungsrichtung aufweisen, die in montiertem Zustand parallel zu einer Haupterstreckungsrichtung des Gehäuses 80f ausgerichtet ist. Die Verriegelelemente 90f, 92f weisen orthogonal zu ihrer Haupterstreckungsrichtung jeweils ein Kreisringsegment als Querschnitt auf. Die Verriegelelemente 90f, 92f sind dabei zu einer Mittelachse des zylindrisch ausgebildeten Gehäuses 80f zueinander spiegelbildlich angeordnet. Die Verriegelelemente 90f, 92f weisen jeweils eine Lagerstelle 94f, 96f auf, über die die Verriegelelemente 90f, 92f schwenkbar in dem Gehäuse 80f angeordnet sind. Dazu bilden die Lagerstellen 94f, 96f jeweils ein nicht näher beschriebenes erstes, gehäuseseitiges Lagerelement, das von dem Gehäuse 80 ausgebildet ist, und ein zweites mit von dem jeweiligen Verriegelelement 90f, 92f gebildetes Lagerelement aus. Die Lagerelemente sind jeweils als Gleitlager ausgebildet. Grundsätzlich wäre es auch denkbar, dass zur Lagerung der Verriegelelemente 90f, 92f Wälzlager verwendet werden. Die Lagerstellen 94f, 96f sind dabei jeweils auf einer dem zweiten axialen Ende des Gehäuses 80f zugewandten Seite angeordnet. Über die Lagerstellen 94f, 96f kann ein vorderes axiales Ende der Verriegelelemente 90f, 92f, welches in montiertem Zustand dem zweiten axialen Ende des Gehäuses 80f zugeordnet ist, nach außen, in eine geöffnete Stellung geschwenkt werden. An ihren hinteren axialen Enden, die in montiertem Zustand dem ersten axialen Ende des Gehäuses 80f zugewandt sind, sind die beiden Verriegelelemente 90f, 92f über ein Federelement 100f miteinander gekoppelt. Das Federelement 100f übt eine Federkraft auf die Verriegelelemente 90f, 92f aus, welche die Verriegelelemente 90f, 92f in dem hinteren axialen Ende voneinander wegdrückt. Das Federelement 100f ist dabei als eine Spiralfeder ausgebildet. Grundsätzlich wäre es auch denkbar, dass das Federelement als ein anderes, dem Fachmann als sinnvoll erscheinendes Federelement ausgebildet ist. Das Federelement 100f drückt über seine Federkraft die Verriegelelemente 90f, 92f in einen Ruhezustand. In dem Ruhezustand verriegeln die Verriegelelemente 90f, 92f des Verriegelungsmoduls 88f die Rückenlehnenaufschlagssicherungsvorrichtung 14f. Zur Verriegelung der Rückenlehnenaufschlagssicherungsvorrichtung 14f weisen die Verriegelelemente 90f, 92f an ihrem vorderen Ende jeweils ein Formschlusselement 102f, 104f auf. Die Formschlusselemente 102f, 104f sind dabei jeweils als ein Zahnprofil ausgebildet, das an einer nach innen gerichteten Innenseite der Verriegelelemente 90f, 92f angeordnet ist. Grundsätzlich ist es auch denkbar, dass die Formschlusselemente 102f, 104f eine andere Form aufweisen. Die Formschlusselemente 102f, 104f der Verriegelelemente 90f, 92f bilden einen gehäusefesten Teil des Verriegelungsmoduls 88f aus. Die Formschlusselemente 102f, 104f sind über die schwenkbare Lagerung der Verriegelelemente 90f, 92f fest mit dem Gehäuse 80f gekoppelt. Zur formschlüssigen Verbindung mit den Formschlusselementen 102f, 104f der Verriegelelemente 90f, 92f weist das Element 84f ein korrespondierend ausgebildetes Formschlusselement 106f auf. Das Formschlusselement 106f ist als eine auf dem Element 84f umlaufende Verzahnung ausgebildet, die komplementär zu den Zahnprofilen der Formschlusselemente 102f, 104f der Verriegelelemente 90f, 92f ausgebildet ist. In der Ruhestellung der Verriegelelemente 90f, 92f greifen die Formschlusselemente 102f, 104f in das Formschlusselement 106f ein, das von dem Element 84f gebildet ist. Durch die Verbindung der Formschlusselemente 102f, 104f, 106f sind das Element 84f und das Gehäuse 80f über die Verriegelelemente 90f, 92 starr miteinander verbunden. Dabei drückt das Federelement 100f, die Formschlusselemente 102f, 104f über die Umlenkung über die Lagerstellen 94f, 96f jeweils in das Formschlusselement 106f. Dadurch wird eine Haltekraft erhöht und über die Formschlussverbindung zwischen den Formschlusselementen 102f, 104f der Verriegelelemente 90f, 92f und dem Formschlusselement 106f des Elements 84f kann eine größere Kraft übertragen werden. Grundsätzlich wäre es auch denkbar, dass das Verriegelungsmodul 88f auf eine andere Weise aufgebaut ist und beispielsweise die Verriegelelemente 90f, 92 in einer Entriegelstellung durch eine elektromagnetische Kraft auslenkt und in einer Verriegelstellung durch eine elektromagnetische Kraft sperrt.

Die Rückenlehnenaufschlagssicherungsvorrichtung 14f umfasst ein Trägheitsmodul 16f. Das Trägheitsmodul 16f ist dazu vorgesehen, die Rückenlehnenaufschlagssicherungsvorrichtung 14f in einem Crashfall zumindest teilweise zu entriegeln. In dem Normalbetriebstand der Rückenlehnenaufschlagssicherungsvorrichtung 14f ist das Trägheitsmodul 16f in einer Verriegelstellung angeordnet. Dabei ist die Verriegelstellung des Trägheitsmoduls 16f durch einen Bereich gebildet, in dem das Trägheitsmodul 16 angeordnet sein kann, ohne dass dieses die Rückenlehnenaufschlagssicherungsvorrichtung 14f teilweise entriegelt. Das Trägheitsmodul 16f ist von einem Masseelement 108f gebildet, das axial verschiebbar in dem Innenraum des Gehäuses 80f angeordnet ist. Das Masseelement 108f ist an einem ersten axialen Ende des Gehäuses 80f angeordnet. Das Masseelement 108f weist eine zylindrische Form auf. Das Masseelement 108f ist über eine Gleitlagerung in dem Innenraum des Gehäuses 80f gelagert. Das Masseelement 108f weist an seinem ersten Ende, das in montiertem Zustand dem ersten axialen Ende des Gehäuses 80f zugewandt ist, eine flache Wandung auf. An einem zweiten Ende, das den Verriegelelementen 90f, 92f in montiertem Zustand zugewandt ist, weist das Masseelement 108f eine Betätigungskontur 110f auf. Die Betätigungskontur 110f ist konkav ausgebildet. Die Betätigungskontur 110f weist eine Kegelform auf. Die Betätigungskontur 110f erstreckt sich von dem ersten Ende des Masseelements 108f von einem radialen Außenbereich in Richtung des zweiten Endes des Masseelements 108f nach innen. Die Betätigungskontur 110f ist dazu vorgesehen, die Verriegelelemente 90f, 92f aus ihrer Ruheposition auszulenken. Dazu ist das Masseelement 108f zur Auslenkung der Verriegelelemente 90f, 92f dazu vorgesehen, die Verriegelelemente 90f, 92f an ihrem hinteren Ende jeweils aufeinander zu zu drücken. Grundsätzlich ist es auch denkbar, dass die Betätigungskontur 110f eine andere Form, wie beispielsweise eine Kugelform, eine Ellipsenform oder eine Mischform ausbildet. Durch Ausbildung der Betätigungskontur 110f sowie durch die Kontur der Verriegelelemente 90f, 92f und das Gewicht des Masseelements 108f kann eine Auslöseverzögerung eingestellt werden. Ebenfalls kann eine Geschwindigkeit der Auslösung eingestellt werden.

Das Trägheitsmodul 16f ist zur Entriegelung der Rückenlehnenaufschlagssicherungsvorrichtung 14f dazu vorgesehen, die Verriegelelemente 90f, 92f zumindest temporär auszulenken. In einem Crashfall ist das Trägheitsmodul 16f zur Entriegelung der Rückenlehnenaufschlagssicherungsvorrichtung 14f dazu vorgesehen, aus seiner Verriegelposition ausgelenkt zu werden. Dabei ist das Trägheitsmodul 16f dazu vorgesehen, vor dem Einwirken der Aufschlagskräfte aus einer Verriegelposition ausgelenkt zu werden. Ist das Trägheitsmodul 16f aus seiner Verriegelposition ausgelenkt, gelangt die Rückenlehnenaufschlagssicherungsvorrichtung 14f von der Verriegelstellung in die Entriegelstellung. Dazu bildet das Trägheitsmodul 16f das Masseelement 108f aus. Das Masseelement 108f ist dazu vorgesehen, dem Trägheitsmodul 16f eine Masse zu verleihen, die durch ihre Massenträgheit in einem Crashfall das Trägheitsmodul 16f in der Rückenlehnenaufschlagssicherungsvorrichtung 14f aus seiner Verriegelposition auslenkt und die Rückenlehnenaufschlagssicherungsvorrichtung 14f durch Auslenken der Verriegelelemente 90f, 92f zumindest teilweise entriegelt.

Die Rückenlehnenaufschlagssicherungsvorrichtung 14f weist wenigstens ein Federelement 112f auf, das dazu vorgesehen ist, das Trägheitsmodul 16f in seiner Verriegelstellung zu halten. Das Federelement 112f ist in dem Innenraum des Gehäuses 80f angeordnet. Das Federelement 112f ist funktionell zwischen dem Gehäuse 80f und dem Trägheitsmodul 16f angeordnet. Das Federelement 112f stützt sich an dem Gehäuse 80f ab und übt eine Federkraft auf das in dem Gehäuse 80f axial verschiebbar gelagerte Trägheitsmodul 16f aus. Mit einem ersten Ende liegt das Federelement 112f an dem Masseelement 108f an. Mit einem zweiten Ende stützt sich das Federelement 112f über einen nicht näher dargestellten Anbindungsbereich an einer Innenseite des Gehäuses 80f ab. Dabei ist das Federelement 112f zwischen dem zweiten Ende des Gehäuses 80f und dem Masseelement 108f des Trägheitsmoduls 16f angeordnet. Das Federelement 112f ist als eine Druckfeder ausgebildet. Dadurch wird das Masseelement 108f des Trägheitsmoduls 16f in dem Gehäuse 80f in Richtung des ersten Ende des Gehäuses 80f in seine Verriegelstellung gedrückt. In einem Crashfall muss sich das Masseelement 108f gegen die Federkraft des Federelements 112f in Auslöserichtung bewegen, um die Rückenlehnenaufschlagssicherungsvorrichtung 14f zu entriegeln. Über die Steifigkeit des Federelements 112f und/oder die Masse des Masseelements 108f kann eine nötige Beschleunigung, die zur teilweisen Entriegelung der Rückenlehnenaufschlagssicherungsvorrichtung 14f notwendig ist, einfach eingestellt werden und somit an verschiedene Flugzeugsitzmodelle und andere Gegebenheiten angepasst werden. Das Federelement 112f ist dabei als eine Spiralfeder ausgebildet. Grundsätzlich ist es ebenfalls denkbar, dass das Federelement 112f als ein anderes, dem Fachmann als sinnvoll erscheinendes Federelement ausgebildet ist, wie beispielsweise eine Gasdruckfeder, ein magnetisches und/oder elektrisches Federelement oder ein Federelement, das durch Komprimierung eines Fluids eine Rückstellkraft erzeugt.

Die Rückenlehnenaufschlagssicherungsvorrichtung 14f umfasst ein Verzögerungselement 30f. Das Verzögerungselement 30f ist zur Aufnahme von Trägheitsenergie der Rückenlehne 10f nach der teilweisen Entkopplung der Rückenlehnenaufschlagssicherungsvorrichtung 14f vorgesehen. Das Verzögerungselement 30f absorbiert in einem Crashfall zumindest einen Teil von Trägheitskräften, die auf die Rückenlehne 10f einwirken. Zur Aufnahme der Trägheitsenergie ist das Verzögerungselement 30f dazu vorgesehen, plastisch verformt zu werden. Das Verzögerungselement 30f ist in dem Innenraum des Gehäuses 80f angeordnet. Das Verzögerungselement 30f ist funktionell zwischen dem Element 84f und dem Gehäuse 80f angeordnet. Das Verzögerungselement 30f ist dazu vorgesehen, eine Relativbewegung des Elements 84f zu dem Gehäuse 80f nach der teilweisen Entkopplung vor einem Endanschlag abzubremsen. Das Verzögerungselement 30f ist als eine plastisch verformbare Hülse ausgebildet. Das Verzögerungselement 30f umschließt das kolbenartig ausgebildete Element 84f. Das Element 84f weist ein Mitnahmeelement 114f auf. Das Mitnahmeelement 114f ist fest mit dem Element 84f verbunden. Grundsätzlich ist es auch denkbar, dass das Mitnahmeelement 114f einstückig mit dem Element 84f ausgebildet ist. Das Verzögerungselement 30f ist zwischen dem Mitnahmeelement 114f und dem zweiten Ende des Gehäuses 80f angeordnet. Wird das Element 84f nach einer teilweisen Entkopplung in dem Gehäuse 80f in Auslöserichtung verschoben, die Rückenlehnenaufschlagssicherungsvorrichtung 14f also verlängert, nimmt das Mitnahmeelement 114f das Verzögerungselement 30f mit, bis dieses an einer axialen Innenwandung an dem zweiten Ende des Gehäuses 80f anschlägt. Bei der weiteren Bewegung des Elements 84f in die Auslöserichtung wird das Verzögerungselement 30f zwischen dem Mitnahmeelement 114f und der Innenwandung an dem zweiten Ende des Gehäuses 80f eingeklemmt und plastisch verformt. Durch die plastische Verformung des Verzögerungselements 30f wird eine Bewegungsenergie der Rückenlehne 10f in Umformarbeit umgewandelt und dadurch vernichtet. Dadurch wird die eine Verstellung des Elements 84f zu dem Gehäuse 80f und damit eine Verstellung der Rückenlehne 10f nach der teilweisen Entkopplung vor einer Maximalverstellung gedämpft verzögert und nicht abrupt abgebremst.

Im Folgenden soll kurz eine Reaktion der Flugzeugsitzvorrichtung mit der Rückenlehnenaufschlagssicherungsvorrichtung 14f in einem Crashfall beschrieben werden. Figur 11 zeigt schematisch die Flugzeugsitzvorrichtung mit der Rückenlehnenaufschlagssicherungsvorrichtung 14f in ihrer Verriegelstellung. Das Trägheitsmodul 16f ist in seiner Verriegelstellung. Durch das Verriegelungsmodul 88f ist das Gehäuse 80f starr mit dem Element 84f verbunden. Dadurch sind das Anbindungselement 82f, welches mit der Rückenlehne 10f gekoppelt ist, und das Anbindungselement 86f, welches mit dem Sitzbauteil 12f gekoppelt ist starr miteinander verbunden. Kräfte können über die Anbindungselemente 82f, 86f über die Rückenlehnenaufschlagssicherungsvorrichtung 14f zwischen der Rückenlehne 10f und dem Sitzbauteil 12f übertragen werden. Tritt nun in einem Crashfall eine Verzögerung entgegen der Flugrichtung 66f ein, zu der die Rückenlehnenaufschlagssicherungsvorrichtung 14f parallel ausgerichtet ist, wird das über die Rückenlehne 10f mit der Aufständereinheit gekoppelte Gehäuse 80f verzögert und das axial in dem Gehäuse 80f gelagerte Trägheitsmodul 16f wird durch seine Trägheit aus seiner Verriegelstellung ausgelenkt und entgegen der Federkraft des Federelements 112f in Richtung des zweiten Endes des Gehäuses 80f verschoben. Durch die Betätigungskontur 110f des Masseelements 108f des Trägheitsmoduls 16f werden die Verriegelelemente 90f, 92f aus ihrer Ruhestellung geschwenkt und die formschlüssige Verbindung zwischen den mit dem Gehäuse 80f gekoppelten Verriegelelementen 90f, 92f und dem Element 84f über die Formschlusselemente 102f, 104f, 106f wird aufgehoben. Die Rückenlehnenaufschlagssicherungsvorrichtung 14f ist dadurch teilweise entriegelt. Das Element 84f kann sich in dem Gehäuse 80f relativ zu dem Gehäuse 80f verschieben. Die Rückenlehne 10f ist nun zumindest teilweise von dem Sitzbauteil 12f entkoppelt.

Durch die teilweise Entkopplung der Rückenlehne 10f von dem Sitzbauteil 12f kann sich die Rückenlehne 10f um die Lagerstelle 68f, mittels der die Rückenlehne 10f schwenkbar gelagert ist, drehen. Dabei wird aufgrund einer Massenträgheit in dem Crashfall ein Großteil der Rückenlehne 10f in Richtung der Flugrichtung 66f beschleunigt. Der Großteil der Rückenlehne 10f bewegt sich in dem Crashfall in Richtung der Flugrichtung 66f. Aufgrund der Massenträgheit sowie aufgrund der schwenkbaren Lagerung der Rückenlehne 10f um die Lagerstelle 68f bewegt sich ein unterer Bereich der Rückenlehne 10f entgegen der Flugrichtung 66f. Durch die Trägheit der Rückenlehne 10f wird ein Moment um die Lagerstelle 68f in die Rückenlehne 10f eingeleitet, das ein oberes Ende der Rückenlehne 10f nach vorne drückt. Ein unteres Ende, an dem die Rückenlehnenaufschlagssicherungsvorrichtung 14f an die Rückenlehne 10f angebunden ist, wird entgegen der Flugrichtung 66f bewegt. Dabei wird das Gehäuse 80f über die Kopplung mit dem unteren Ende der Rückenlehne 10f nach hinten, entgegen der Flugrichtung 66f, gezogen. Dadurch, dass das Element 84f von dem Gehäuse 80f gelöst ist, kann sich das axial in dem Gehäuse 80f gelagerte Element 84f relativ zu dem Gehäuse 80f verschieben. Durch die Bewegung der Rückenlehne 10f wird die Rückenlehnenaufschlagssicherungsvorrichtung 14f auseinandergezogen und ein Abstand zwischen den Anbindungselementen 82f, 86f wird vergrö-ßert. Über das Mitnahmeelement 114f wird das Verzögerungselement 30f mit dem Element 84f mitgenommen und auch relativ zu dem Gehäuse 80f bewegt. Das Verzögerungselement 30f wird durch die Relativbewegung zwischen dem Gehäuse 80f und dem Element 84f zwischen dem Mitnahmeelement 114f und dem Gehäuse 80f eingeklemmt und verformt sich. Dadurch verzögert das Verzögerungselement 30f die Relativbewegung zwischen dem Gehäuse 80f und dem Element 84f und dadurch die Schwenkbewegung der Rückenlehne 10f.

Die Rückenlehnenaufschlagssicherungsvorrichtung 14f ist dazu vorgesehen, nach der teilweisen Entkopplung wieder in eine Verriegelstellung gebracht zu werden. Durch das Rückführen der Rückenlehnenaufschlagssicherungsvorrichtung 14f nach der teilweisen Entkopplung kann die Rückenlehne 10f nach einer Verstellung während des Crashfalls wieder arretiert werden und ein Fluchtweg für einen Passagier vorteilhaft frei gehalten werden. Die Rückenlehne 10f ist nach dem Crashfall mit ihrem oberen Bereich nach vorne in Flugrichtung 66f geschwenkt. Wird die Rückenlehne 10f wieder nach hinten geschwenkt, wird das Gehäuse 80f wieder in Flugrichtung 66f verschoben und verschiebt sich so relativ zu dem Element 84f. Die durch das Federelement 100g in ihrer Ruhestellung gehaltenen Verriegelelemente 90f, 92f werden durch die schräge Verzahnung des Formschlusselements 106f, das von dem Element 84f gebildet ist, wieder nach außen ausgelenkt. Dadurch können die Formschlusselemente 102f, 104f wieder in Eingriff mit dem Formschlusselement 106f des Elements 84f gebracht werden. Dadurch kann das Gehäuse 80f wieder starr mit dem Element 84f gekoppelt werden und die Rückenlehnenaufschlagssicherungsvorrichtung 14f dadurch wieder verriegelt werden.

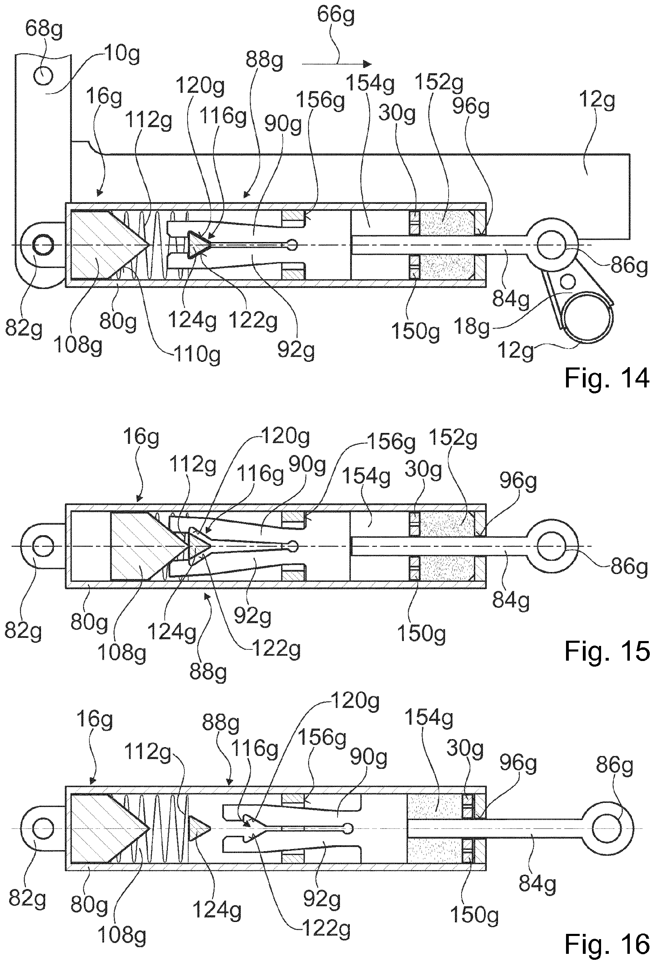

Die Figuren 14 bis 16 zeigen eine erfindungsgemäße Flugzeugsitzvorrichtung in einem siebten Ausführungsbeispiel. Die Flugzeugsitzvorrichtung ist dabei Teil eines teilweise dargestellten Flugzeugsitzes 32g. Der Flugzeugsitz 32g ist dabei Teil eines nicht näher dargestellten Flugzeugs. Der Flugzeugsitz 32g ist dabei in einem montierten Zustand in einer Flugzeugkabine des Flugzeugs aufgeständert. Die Flugzeugsitzvorrichtung umfasst eine Rückenlehne 10g. Die Rückenlehne 10g ist dabei dazu vorgesehen, dass eine Person, die auf dem Flugzeugsitz 32g, dessen Teil die Flugzeugsitzvorrichtung ist, sitzt, ihren Rücken an der Rückenlehne 10g abstützen kann. Die Rückenlehne 10g ist dabei an einem nicht näher dargestellten Sitzteiler über eine Lagerstelle 68g schwenkbar angelenkt. Die Flugzeugsitzvorrichtung umfasst weiter ein Sitzbauteil 12g. Das Sitzbauteil 12g ist als eine Querversteifungseinheit ausgebildet, die dazu vorgesehen ist, die Rückenlehne 10g in der Querversteifungseinheitenquerrichtung zu versteifen. Zudem ist das als Querversteifungseinheit ausgebildete Sitzbauteil 12g dazu vorgesehen, die eine Seite des Flugzeugsitzes 32g, dessen Teil die Flugzeugsitzvorrichtung ist, mit der weiteren Seite des Flugzeugsitzes 32g zu verbinden. Ferner weist die Flugzeugsitzvorrichtung einen Sitzboden 58g auf. Grundsätzlich ist es auch denkbar, dass das Sitzbauteil 12g als ein Sitzboden oder ein Bauteil der Sitzstruktur ausgebildet ist. Der Sitzboden 58g bildet eine Sitzfläche aus. Der Sitzboden 58g ist mit der Rückenlehne 10g gekoppelt.

Die Flugzeugsitzvorrichtung umfasst eine Rückenlehnenaufschlagssicherungsvorrichtung 14g. Die Rückenlehnenaufschlagssicherungsvorrichtung 14g ist zumindest in einem Normalbetriebszustand dazu vorgesehen, die Rückenlehne 10g und das Sitzbauteil 12g in einer Verriegelstellung starr zu verbinden. In dem Normalbetriebszustand, der einen normalen und ordnungsgemäßen Gebrauch des Flugzeugsitzes 32g abbildet, können Kräfte über die Rückenlehnenaufschlagssicherungsvorrichtung 14g von der Rückenlehne 10g in das Sitzbauteil 12g übertragen werden. Die Rückenlehnenaufschlagssicherungsvorrichtung 14g ist dazu vorgesehen, die Rückenlehne 10g in zumindest einem Betriebszustand von dem Sitzbauteil 12g teilweise zu entkoppeln. Durch die teilweise Entkopplung der Rückenlehne 10g von dem Sitzbauteil 12g können in einem Crashfall die Rückenlehne 10g und das Sitzbauteil 12g eine Relativbewegung zueinander ausüben, um so eine Verletzungsgefahr für einen auf dem Flugzeugsitz 32g sitzenden Passagier zu reduzieren.

Die Rückenlehnenaufschlagssicherungsvorrichtung 14g entkoppelt die Rückenlehne 10g vor einem Einwirken der Aufschlagskräfte auf die Rückenlehne 10g von dem Sitzbauteil 12g. Die Rückenlehne 10g ist dazu vorgesehen, nach der teilweisen Entkopplung wieder in einer Verriegelstellung verriegelt zu werden. Dadurch kann die Rückenlehne 10g nach der teilweisen Entkopplung und der dabei vollzogenen Bewegung zu dem Sitzbauteil 12g wieder in der Verriegelstellung verriegelt werden. Die Verriegelstellung kann dabei dieselbe sein, in der die Rückenlehne 10g in dem Normalbetriebszustand verriegelt ist, es ist aber auch denkbar, dass die Verriegelstellung, in der die Rückenlehne 10g nach der teilweisen Entkopplung wieder verriegelt wird, von der Verriegelstellung in dem Normalbetriebszustand unterschiedlich ist. Die Rückenlehnenaufschlagssicherungsvorrichtung 14g umfasst ein Gehäuse 80g. Das Gehäuse 80g ist dazu vorgesehen, die Rückenlehnenaufschlagssicherungsvorrichtung 14g zu umhausen. Das Gehäuse 80g umfasst ein Anbindungselement 82g. Das Anbindungselement 82g ist als ein Formschlusselement ausgebildet und zur starren Verbindung mit einem äquivalent ausgebildeten Anbindungselement vorgesehen. Das Anbindungselement 82g ist an einem ersten axialen Ende des Gehäuses 80g angeordnet und bildet damit ein erstes axiales Ende der Rückenlehnenaufschlagssicherungsvorrichtung 14g aus. Über das Anbindungselement 82g ist das Gehäuse 80g mit der Rückenlehne 10g starr verbindbar. Die Rückenlehnenaufschlagssicherungsvorrichtung 14g umfasst ein Element 84g, das axial verschiebbar in dem Gehäuse 80g gelagert ist. Das Element 84g ist als ein Kolbenelement ausgebildet. Das als Kolbenelement ausgebildete Element 84g erstreckt sich in montiertem Zustand in dem Innenraum des Gehäuses 80g. Ein erstes axiales Ende des Elements 84g ist in montiertem Zustand dem ersten axialen Ende des Gehäuses 80g zugewandt. An einem zweiten axialen Ende des Gehäuses 80g, das dem ersten axialen Ende des Gehäuses 80g gegenüberliegt, ragt das Element 84g aus dem Gehäuse 80g heraus. Das Element 84g umfasst ein Anbindungselement 86g. Das Anbindungselement 86g ist als ein Formschlusselement ausgebildet und zur starren Verbindung mit einem äquivalent ausgebildeten Anbindungselement vorgesehen. Über das Anbindungselement 86g ist das Element 84g mit dem Sitzbauteil 12g starr verbindbar. Die Rückenlehnenaufschlagssicherungsvorrichtung 14g weist einen Anschlag 156g auf. Der Anschlag 156g ist dazu vorgesehen, das Element 84g auf eine Maximalstellung in dem Gehäuse 80g zu begrenzen. Der Anschlag 156g ist von Erhebungen ausgebildet, die sich in dem Innenraum des Gehäuses 80g nach innen erheben. Der Anschlag 156g ist insbesondere von einer Buchse ausgebildet, die in dem Innenraum des Gehäuses 80g eingebracht ist. Der Anschlag 156g begrenzt eine Bewegung des Elements 84g in dem Gehäuse 80g in Richtung des ersten axialen Endes des Gehäuses 80g. In der Verriegelstellung schlägt das Element 84g an dem Anschlag 156g an.

Die Rückenlehnenaufschlagssicherungsvorrichtung 14g weist wenigstens ein Verriegelungsmodul 88g auf, das in einer Verriegelstellung die Rückenlehnenaufschlagssicherungsvorrichtung 14g sperrt. Insbesondere das Verriegelungsmodul 88g der Rückenlehnenaufschlagssicherungsvorrichtung 14g unterscheidet sich von dem Verriegelungsmodul der entsprechenden Rückenlehnenaufschlagssicherungsvorrichtung aus dem sechsten Ausführungsbeispiel der Figuren 11 bis 13. Im Gegensatz zu dem Verriegelungsmodul der entsprechenden Rückenlehnenaufschlagssicherungsvorrichtung aus dem sechsten Ausführungsbeispiel weist das Verriegelungsmodul 88g zwei Verriegelelemente 90g, 92g, die als kolbenfeste elastisch verformbare Hebel ausgebildet sind, auf. Die Verriegelelemente 90g, 92g sind einstückig mit dem Element 84g ausgebildet. Die Verriegelelemente 90g, 92g sind aus einem elastisch verfombaren Material gebildet. Die Verriegelelemente 90g, 92g erstrecken sich in montiertem Zustand von dem Element 84g aus in Richtung eines ersten Ende des Gehäuses 80g. Die Verriegelelemente 90g, 92g sind beabstandet zueinander angeordnet. Mit einem ersten Ende, das dem Element 84g zugewandt ist, sind die Verriegelelemente 90g, 92g jeweils mit dem Element 84g verbunden. In Richtung ihrer zweiten Enden, die dem Element 84g abgewandt sind, weisen die Verriegelelemente 90g, 92g einen größer werdenden Abstand auf. Die beiden Verriegelelemente 90g, 92g bilden im Bereich ihrer zweiten Enden zusammen ein Formschlusselement 116g aus. Das Formschlusselement 116g ist von zwei einander zugewandten Einkerbungen 120g, 122g in den Innenseiten der Verriegelelemente 90g, 92g gebildet. Die Einkerbungen 120g, 122g in den Verriegelelementen 90g, 92g sind einander zugewandt. Die Einkerbungen 120g, 122g sind dabei in einem gleichen Abstand zu dem Element 84 in das jeweilige Verriegelelement 90g, 92g eingebracht. Zusammen bilden die beiden Einkerbungen 120g, 122g in einem unausgelenkten Zustand der Verriegelelemente 90g, 92g eine dreiecksförmige Form aus. Eine Spitze des dreiecksförmigen Formschlusselements 116g ist dabei in Richtung des Elements 84g gerichtet. Das Verriegelungsmodul 88g weist ein gehäusefestes Formschlusselement 124g auf. Das Formschlusselement 124g ist starr mit dem Gehäuse 80g verbunden. Das Formschlusselement 124g erstreckt sich quer durch den Innenraum des Gehäuses 80g. Das Formschlusselement 124g ist dabei äquivalent zu dem von den Verriegelelementen 90g, 92g ausgebildeten Formschlusselement 116g ausgebildet. Das Formschlusselement 124g weist einen dreiecksförmigen Querschnitt auf. Grundsätzlich ist auch denkbar, dass das Formschlusselement 124g einen anderen Querschnitt aufweist, wie beispielsweise eine Halbkreisform, eine Kreisform oder eine elliptische Form. Das entsprechende von den Verriegelelementen 90g, 92g ausgebildete Formschlusselement 116g wäre dementsprechend äquivalent ausgebildet. Das Formschlusselement 124g ist dabei von einem dreiecksförmigen Bolzen gebildet, der durch den Innenraum des Gehäuses 80g geführt ist. Der Bolzen, der das Formschlusselement 124g bildet, ist dabei fest mit dem Gehäuse 80g verbunden. In der Verriegelstellung der Rückenlehnenaufschlagssicherungsvorrichtung 14g umgreifen die Verriegelelemente 90g, 92g das Formschlusselement 124g. Das Formschlusselement 124g ist in der Verriegelstellung in den das Formschlusselement 116g bildenden Einkerbungen 120g, 122g der Verriegelelemente 90g, 92g angeordnet. Dadurch sind das Formschlusselement 124g und das Formschlusselement 116g formschlüssig miteinander verbunden. Dadurch ist die Rückenlehnenaufschlagssicherungsvorrichtung 14g verriegelt und eine Kraft kann über die Rückenlehnenaufschlagssicherungsvorrichtung 14g zwischen der Rückenlehne 10g und dem Sitzbauteil 12g übertragen werden.

Die Rückenlehnenaufschlagssicherungsvorrichtung 14g umfasst ein Trägheitsmodul 16g. Das Trägheitsmodul 16g ist dazu vorgesehen, die Rückenlehnenaufschlagssicherungsvorrichtung 14g in einem Crashfall zumindest teilweise zu entriegeln. Das Trägheitsmodul 16g ist im Wesentlichen gleich ausgestaltet wie das Trägheitsmodul aus dem sechsten Ausführungsbeispiel der Figuren 11 bis 13. Das Trägheitsmodul 16g ist von einem Masseelement 108g gebildet, das axial verschiebbar in dem Innenraum des Gehäuses 80g angeordnet ist. Das Masseelement 108g ist an einem ersten axialen Ende des Gehäuses 80g angeordnet. Im Unterschied zu dem Masseelement des Trägheitsmoduls aus dem sechsten Ausführungsbeispiel der Figuren 11 bis 13 weist das Masseelement 108g eine anders ausgeformte Betätigungskontur 110g auf. Die Betätigungskontur 110g ist konvex ausgebildet. Die Betätigungskontur 110g weist eine konvexe Kegelform auf. Die Betätigungskontur 110g erstreckt sich von einem ersten Ende des Masseelements 108g, das den Verriegelelementen 90g, 92g zugewandt ist, von einem radialen Außenbereich in Richtung der Verriegelelemente 90g, 92g nach innen. Über die konvex keilförmig ausgebildete Betätigungskontur 110g ist das Trägheitsmodul 16g dazu vorgesehen, die formschlüssige Verbindung zwischen dem Formschlusselementen 116g, 124g zu lösen. Dazu ist die konvex keilförmig ausgebildete Betätigungskontur 110g dazu vorgesehen, die Verriegelelemente 90g, 92g auseinanderzudrücken, um so das gehäusefeste Formschlusselement 124 aus der Umschlingung des von den Verriegelelementen 90g, 92g gebildeten Formschlusselements 116g zu lösen. Die Betätigungskontur 110g ist dazu vorgesehen, die Verriegelelemente 90g, 92g aus ihrer Ruheposition auszulenken. Das Masseelement 108g ist zur Auslenkung der Verriegelelemente 90g, 92g dazu vorgesehen, die Verriegelelemente 90g, 92g an ihrem zweiten Ende jeweils auseinanderzudrücken.

Die Rückenlehnenaufschlagssicherungsvorrichtung 14g weist wenigstens ein Federelement 112g auf, das dazu vorgesehen ist, das Trägheitsmodul 16g in seiner Verriegelstellung zu halten. Die Rückenlehnenaufschlagssicherungsvorrichtung 14g umfasst ein Verzögerungselement 30g. Das Verzögerungselement 30g ist zur Aufnahme von Trägheitsenergie der Rückenlehne 10g nach der teilweisen Entkopplung der Rückenlehnenaufschlagssicherungsvorrichtung 14g vorgesehen. Funktionell ist das Verzögerungselement 30g gleich ausgebildet wie das entsprechende Verzögerungselement aus der Rückenlehnenaufschlagssicherungsvorrichtung aus dem sechsten Ausführungsbeispiel der Figuren 11 bis 13. In der Ausgestaltung unterscheidet sich das Verzögerungselement 30g von dem entsprechenden Verzögerungselement aus der Rückenlehnenaufschlagssicherungsvorrichtung aus dem sechsten Ausführungsbeispiel der Figuren 11 bis 13. Das Verzögerungselement 30g ist als ein Dämpfungselement ausgebildet. Das als Dämpfungselement ausgebildete Verzögerungselement 30g ist dazu vorgesehen, ohne plastische Verformung eine Bewegungsenergie aufzunehmen. Das Verzögerungselement 30g ist als eine Gasdruckfeder ausgebildet. Das Verzögerungselement 30g ist dazu vorgesehen, durch Strömen eines Fluids eine Energie aufzunehmen. Das Verzögerungselement 30g weist eine Blende 150g auf, die zwei Kammern 152g, 154g voneinander trennt. Die Blende 150g ist fest mit dem Element 84g verbunden. Die Blende 150g trennt die beiden Kammern 152g, 154g in dem Inneren des Gehäuses radial innen von dem Element 84g bis radial außen an das Gehäuse 80g voneinander ab. Die Blende 150g weist mehrere, nicht näher dargestellte Durchgangslöcher auf, durch die die beiden von der Blende 150g voneinander getrennten Kammern 152g, 154g fluidtechnisch miteinander verbunden sind. Durch die Durchgangslöcher kann ein Fluid von der einen Kammer 152g in die andere Kammer 154g gelangen. Bei dem Fluid kann es sich dabei um ein Gas oder eine Flüssigkeit handeln. Grundsätzlich ist es denkbar, dass die Durchgangslöcher in einem Normalzustand von Membranen geschlossen sind, welche in einem Crashfall durch die Bewegung des Elements 84g und des Fluids zerstört werden und so die Durchgangslöcher freigeben. Wird in dem Crashfall das Element 84g zu dem Gehäuse 80g bewegt, so wird die Kammer 152g von der Blende 150g verkleinert und das in der Kammer angeordnete Fluid strömt durch die Durchgangsöffnungen der Blende 150g in die Kammer 154g. Dadurch wird Energie abgebaut und die Rückenlehne 10g verzögert. Eine Funktionsweise des Verzögerungselements 30g in dem Crashfall ist entsprechend dem des vorherigen Ausführungsbeispiels.

Wie auch die Rückenlehnenaufschlagssicherungsvorrichtung aus dem sechsten Ausführungsbeispiel kann die Rückenlehnenaufschlagssicherungsvorrichtung 14g nach einem teilweisen Entkoppeln wieder in die Verriegelstellung verrastet werden. Dabei wird analog zu dem sechsten Ausführungsbeispiel das Element 84g durch Bewegung der Rückenlehne 10g relativ zu dem Gehäuse 80g bewegt, sodass das Formschlusselement 116g der Verriegelelemente 90g, 92g und das gehäusefeste Formschlusselement 124g wieder in einen Eingriff kommen. Dazu werden die Verriegelelemente 90g, 92g wieder über das Formschlusselement 124g gedrückt und schnappen mit ihren Einkerbungen 120g, 122g durch eine durch die Auslenkung der Verriegelelemente 90g, 92g erzeugte Rückstellkraft wieder in das Formschlusselement 124g ein. Dadurch ist die Rückenlehnenaufschlagssicherungsvorrichtung 14g wieder in der Verriegelstellung und die Rückenlehne 10g wieder verriegelt.

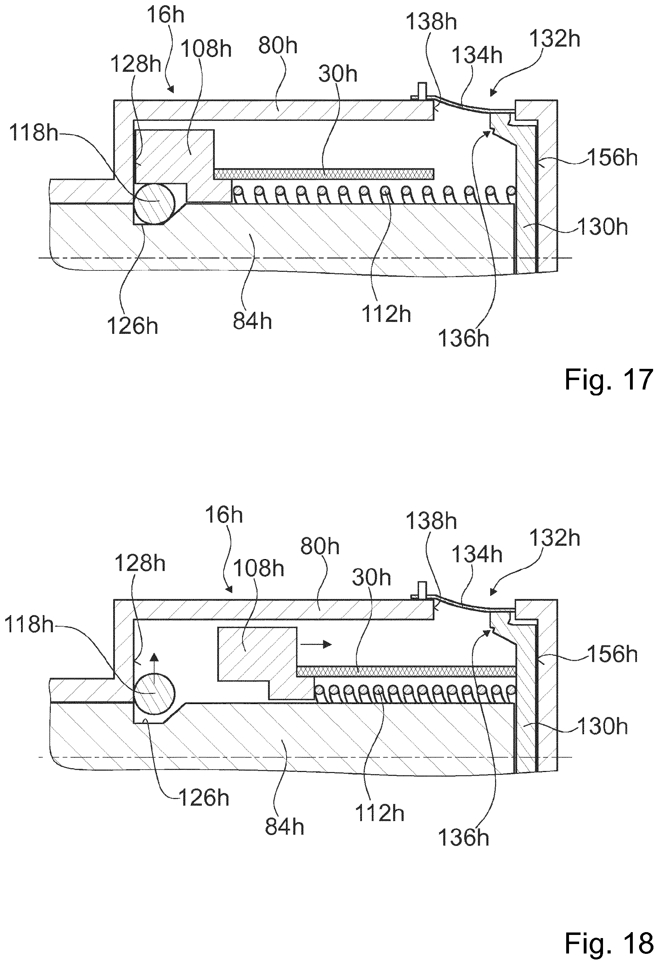

Figuren 17 bis 20 zeigen eine erfindungsgemäße Flugzeugsitzvorrichtung in einem achten Ausführungsbeispiel. Die Flugzeugsitzvorrichtung ist dabei Teil eines nicht näher dargestellten Flugzeugsitzes. Die Flugzeugsitzvorrichtung umfasst eine Rückenlehne und ein Sitzbauteil entsprechend den vorhergehenden Ausführungsbeispielen, die hier nicht näher beschrieben sind. Das Sitzbauteil ist als eine Querversteifungseinheit ausgebildet, die dazu vorgesehen ist, die Rückenlehne in der Querversteifungseinheitenquerrichtung zu versteifen. Die Flugzeugsitzvorrichtung umfasst eine Rückenlehnenaufschlagssicherungsvorrichtung 14h. Die Rückenlehnenaufschlagssicherungsvorrichtung 14h ist zumindest in einem Normalbetriebszustand dazu vorgesehen, die Rückenlehne und das Sitzbauteil in einer Verriegelstellung starr zu verbinden. Die Rückenlehnenaufschlagssicherungsvorrichtung 14h ist entsprechend den Rückenlehnenaufschlagssicherungsvorrichtungen der vorhergehenden Ausführungsbeispiele mit der Rückenlehne und dem Sitzbauteil verbunden. In dem Normalbetriebszustand, der einen normalen und ordnungsgemäßen Gebrauch des Flugzeugsitzes abbildet, können Kräfte über die Rückenlehnenaufschlagssicherungsvorrichtung 14h von der Rückenlehne in das Sitzbauteil übertragen werden. Die Rückenlehnenaufschlagssicherungsvorrichtung 14h ist dazu vorgesehen, die Rückenlehne in zumindest einem Betriebszustand von dem Sitzbauteil teilweise zu entkoppeln. Die Rückenlehnenaufschlagssicherungsvorrichtung 14h entkoppelt die Rückenlehne vor einem Einwirken der Aufschlagskräfte auf die Rückenlehne von dem Sitzbauteil. Die Rückenlehne ist dazu vorgesehen, nach der teilweisen Entkopplung wieder in einer Verriegelstellung verriegelt zu werden.

Die Rückenlehnenaufschlagssicherungsvorrichtung 14h umfasst ein Gehäuse 80h. Das Gehäuse 80h ist dazu vorgesehen, die Rückenlehnenaufschlagssicherungsvorrichtung 14h zu umhausen. Das Gehäuse 80h umfasst ein nicht näher dargestelltes Anbindungselement, über das das Gehäuse 80h in montiertem Zustand mit dem Sitzbauteil gekoppelt ist. Die Rückenlehnenaufschlagssicherungsvorrichtung 14h umfasst ein Element 84h, das axial verschiebbar in dem Gehäuse 80h gelagert ist. Das Element 84h ist als ein Kolbenelement ausgebildet. Das als Kolbenelement ausgebildete Element 84h erstreckt sich in montiertem Zustand in den Innenraum des Gehäuses 80h. Das Element 84h umfasst ein nicht näher dargestelltes Anbindungselement, über das das Element 84h in montiertem Zustand mit der Rückenlehne gekoppelt ist.

Die Rückenlehnenaufschlagssicherungsvorrichtung 14h weist ein Verriegelungsmodul 88h auf, das in einer Verriegelstellung die Rückenlehnenaufschlagssicherungsvorrichtung 14h sperrt. Insbesondere das Verriegelungsmodul 88h der Rückenlehnenaufschlagssicherungsvorrichtung 14h unterscheidet sich von dem Verriegelungsmodul der entsprechenden Rückenlehnenaufschlagssicherungsvorrichtung aus den vorhergehenden Ausführungsbeispielen. Das Verriegelungsmodul 88h umfasst ein Kopplungselement 118h. Das Kopplungselement 118h ist als eine Kugel ausgebildet. Das Gehäuse 80h und das Element 84h sind in einer Verriegelstellung über das Kopplungselement miteinander verbunden. Das Element 84h weist eine Vertiefung 126h auf, in der das als Kugel ausgebildete Kopplungselement 118h in der Verriegelstellung angeordnet ist. Dabei ist in den Figuren zur deutlicheren Darstellung die Vertiefung 126h nicht maßstabsgetreu eingezeichnet. Die Vertiefung 126h ist nicht so tief wie in den Figuren dargestellt, um ein Verkanten des Kopplungselements 118h zu verhindern. Das Gehäuse 80h bildet einen Absatz 128h aus. In der Verriegelstellung liegt das Kopplungselement 118h formschlüssig an der Vertiefung 126h und dem Absatz 128h an. Dadurch sind das Gehäuse 80h und das Element 84h in der Verriegelstellung über das Kopplungselement 118h miteinander verbunden. Die Rückenlehnenaufschlagssicherungsvorrichtung 14h umfasst ein Trägheitsmodul 16h. Zur Sicherung des Kopplungselements 118h in der Verriegelstellung weist die Rückenlehnenaufschlagssicherungsvorrichtung 14h ein Trägheitsmodul 16h auf. Das Trägheitsmodul 16h ist weiter dazu vorgesehen, die Rückenlehnenaufschlagssicherungsvorrichtung 14h in einem Crashfall zumindest teilweise zu entriegeln. Das Trägheitsmodul 16h ist von einem Masseelement 108h gebildet, das axial verschiebbar in dem Innenraum des Gehäuses 80h angeordnet ist. In der Verriegelstellung ist das Trägheitsmodul 16h über dem Kopplungselement 118h angeordnet und hält das Kopplungselement 118h so in der Vertiefung 126h des Elements 84h. Die formschlüssige Verbindung zwischen dem Gehäuse 80h und dem Element 84h ist über das Trägheitsmodul 16h gesichert. Wird das Trägheitsmodul 16h in einem Crashfall entgegen einer Flugrichtung ausgelenkt, gibt das Trägheitsmodul 16h das Kopplungselement 118h frei und der Formschluss zwischen dem Gehäuse 80h und dem Element 84h über das Kopplungselement 118h ist freigegeben. Die Rückenlehnenaufschlagssicherungsvorrichtung 14h ist dadurch zumindest teilweise entriegelt, und das Element 84h kann in dem Gehäuse 80h axial verschoben werden. Grundsätzlich ist es auch denkbar, dass die Rückenlehnenaufschlagssicherungsvorrichtung 14h weitere Kopplungselemente 118h und Vertiefungen 126h aufweist, über die das Gehäuse 80h und das Element 84h formschlüssig miteinander verbunden sind.

Die Rückenlehnenaufschlagssicherungsvorrichtung 14h weist ein Federelement 112h auf, das dazu vorgesehen ist, das Trägheitsmodul 16h in seiner Verriegelstellung zu halten. Das Federelement 112h ist entsprechend den vorhergehenden Ausführungsbeispielen ausgebildet. Das Federelement 112h ist als eine Spiralfeder ausgebildet. Das Federelement 112h ist zwischen dem Trägheitsmodul 16h und einer Abstützwandung 130h des Elements 84h angeordnet. In der Verriegelstellung liegt das Element 84h mit der Abstützwandung 130h an einer Innenwandung des Gehäuses 80h an.

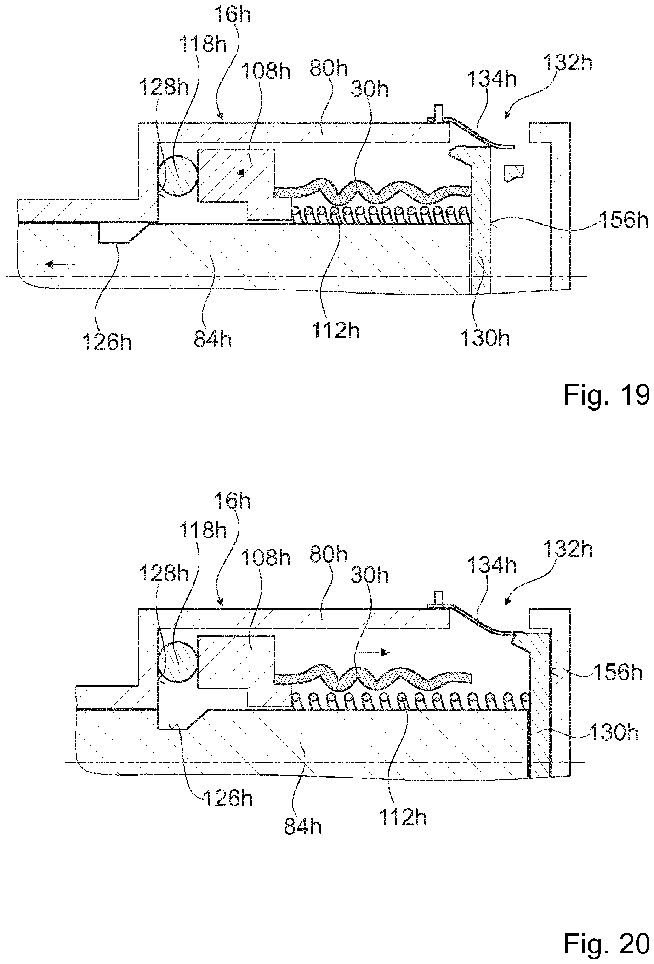

Das Gehäuse 80h weist an seinem Umfang eine Öffnung 132h auf. Grundsätzlich ist es auch denkbar, dass das Gehäuse 80h an seinem Umfang weitere dieser Öffnungen 132h aufweist, für die die folgende Beschreibung ebenfalls herangezogen werden kann. Die Öffnung 132h ist an einem hinteren Ende des Gehäuses 80h angeordnet. Die Abstützwandung 130h ragt bis in die Öffnung 132h des Gehäuses 80h hinein. Die Rückenlehnenaufschlagssicherungsvorrichtung 14h weist ein Blattfederelement 134h auf. Das Blattfederelement 134h ist an einer Außenseite des Gehäuses 80h fest angebunden und ragt in die Öffnung 132h hinein. Mit einem losen Ende liegt das Blattfederelement 134h in der Verriegelstellung auf der Abstützwandung 130h des Elements 84h auf (siehe Figur 17). Die Abstützwandung 130h weist auf einer Höhe einer Unterkante der Öffnung 132h eine Sollbruchstelle 136h auf. Der Bereich oberhalb der Sollbruchstelle 136h ist dazu vorgesehen, während eines Crashfalls, wenn das Element 84h innerhalb des Gehäuses 80h axial verschoben wird, an einer Kante 138h der Öffnung 132h abzubrechen (siehe Figur 19). Ist der Bereich oberhalb der Sollbruchstelle 136h abgebrochen, kann die Abstützwandung 130h innerhalb des Gehäuses 80h verfahren. Alternativ zu der Sollbruchstelle 136c wäre es auch denkbar, dass die Abstützwandung 130h ein Gelenk aufweist, das den Bereich oberhalb des Gelenks verschwenkbar gestaltet. Dabei wäre es denkbar, dass die Abstützwandung anstatt der Sollbruchstelle ein Filmscharnier aufweist, durch das der obere Bereich abklappbar ist, wenn dieser gegen die Kante 138h der Öffnung 132 stößt.

Die Rückenlehnenaufschlagssicherungsvorrichtung 14h weist einen Anschlag 156h auf. Der Anschlag 156h ist dazu vorgesehen, das Element 84h auf eine Maximalstellung in dem Gehäuse 80h zu begrenzen. Der Anschlag 156h ist von der Abstützwandung 130h gebildet, die sich an dem Gehäuses 80h abstützt. Der Anschlag 156h begrenzt eine Bewegung des Elements 84h in dem Gehäuse 80h in Richtung des hinteren Endes des Gehäuses 80h. In der Verriegelstellung schlägt der Anschlag 156h an dem hinteren Ende des Gehäuses 80h an.

In einem Crashfall wird zunächst das Trägheitsmodul 16h gegen die Federkraft des Federelements 112h ausgelenkt. Durch die Auslenkung des Trägheitsmoduls 16h wird das Kopplungselement 118h freigegeben und der Formschluss zwischen dem Gehäuse 80h und dem Element 84h über das Kopplungselement 118h aufgehoben. Dadurch kann die zur Entriegelung der Rückenlehnenaufschlagssicherungsvorrichtung 14h benötigte Beschleunigung besonders einfach und vorteilhaft ausgelegt werden, da lediglich die Masse des Masseelements 108h und die Federkraft des Federelements 112h diese benötigte Beschleunigung beeinflussen. Das Element 84h wird durch die Verschwenkung der Rückenlehne in dem Crash entgegen der Flugrichtung zu dem Gehäuse 80h verschoben. Schlägt der obere Bereich der Abstützwandung 130h des Elements 84h an der Kante 138h der Öffnung 132h an, bricht dieses ab und das Element 84h mit der Abstützwandung 130h verfährt weiter entgegen der Flugrichtung. Die Rückenlehnenaufschlagssicherungsvorrichtung 14h umfasst ein Verzögerungselement 30h. Das Verzögerungselement 30h absorbiert in einem Crashfall zumindest einen Teil von Trägheitskräften, die auf die Rückenlehne einwirken. Zur Aufnahme der Trägheitsenergie ist das Verzögerungselement 30h dazu vorgesehen, plastisch verformt zu werden. Das Verzögerungselement 30h ist zwischen dem Trägheitsmodul 16h und der Abstützwandung 130h angeordnet. Ist das Element 84h um einen definierten Verfahrweg verfahren, wird das Verzögerungselement 30h zwischen dem Trägheitsmodul 16h, das sich an dem Absatz 128h des Gehäuses 80h abstützt und der Abstützwandung 130h eingeklemmt und verformt, wodurch es Energie aufnimmt (Siehe Figur 19). Nach der teilweisen Entriegelung kann die Rückenlehne über die Rückenlehnenaufschlagssicherungsvorrichtung 14h wieder in eine Verriegelstellung gebracht werden. Dazu wird das Element 84h wieder in das Gehäuse 80h zurückgeschoben. Dabei wird die Abstützwandung 130h des Elements 84h zwischen einer Innenwandung des Gehäuses 80h und dem Blattfederelement 134h eingeklemmt und so in der Verriegelstellung verriegelt.

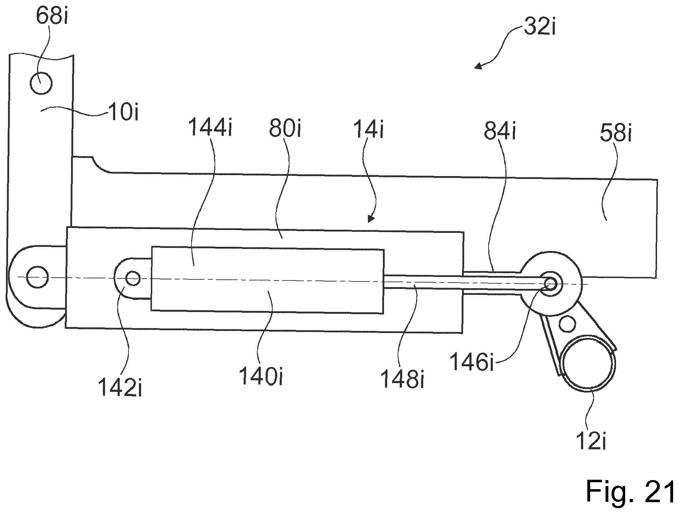

Die Figur 21 zeigt eine erfindungsgemäße Flugzeugsitzvorrichtung in einem neunten Ausführungsbeispiel. Die Flugzeugsitzvorrichtung ist dabei Teil eines teilweise dargestellten Flugzeugsitzes 32i. Der Flugzeugsitz 32i ist dabei Teil eines nicht näher dargestellten Flugzeugs. Der Flugzeugsitz 32i ist dabei in einem montierten Zustand in einer Flugzeugkabine des Flugzeugs aufgeständert. Die Flugzeugsitzvorrichtung umfasst eine Rückenlehne 10i. Die Rückenlehne 10i ist dabei dazu vorgesehen, dass eine Person, die auf dem Flugzeugsitz 32i, dessen Teil die Flugzeugsitzvorrichtung ist, sitzt, ihren Rücken an der Rückenlehne 10i abstützen kann. Die Rückenlehne 10i ist dabei an einem nicht näher dargestellten Sitzteiler über eine Lagerstelle 68i schwenkbar angelenkt. Die Flugzeugsitzvorrichtung umfasst weiter ein Sitzbauteil 12i. Das Sitzbauteil 12i ist als eine Querversteifungseinheit ausgebildet, die dazu vorgesehen ist, die Rückenlehne 10i in der Querversteifungseinheitenquerrichtung zu versteifen. Zudem ist das als Querversteifungseinheit ausgebildete Sitzbauteil 12i dazu vorgesehen, die eine Seite des Flugzeugsitzes 32i, dessen Teil die Flugzeugsitzvorrichtung ist, mit der weiteren Seite des Flugzeugsitzes 32i zu verbinden. Ferner weist die Flugzeugsitzvorrichtung einen Sitzboden 58i auf. Grundsätzlich ist es auch denkbar, dass das Sitzbauteil 12i als ein Sitzboden oder ein Bauteil der Sitzstruktur ausgebildet ist. Der Sitzboden 58i bildet eine Sitzfläche aus. Der Sitzboden 58i ist mit der Rückenlehne 10i gekoppelt.

Die Flugzeugsitzvorrichtung umfasst eine Rückenlehnenaufschlagssicherungsvorrichtung 14i. Die Rückenlehnenaufschlagssicherungsvorrichtung 14i ist zumindest in einem Normalbetriebszustand dazu vorgesehen, die Rückenlehne 10i und das Sitzbauteil 12i in einer Verriegelstellung starr zu verbinden. In dem Normalbetriebszustand, der einen normalen und ordnungsgemäßen Gebrauch des Flugzeugsitzes 32i abbildet, können Kräfte über die Rückenlehnenaufschlagssicherungsvorrichtung 14i von der Rückenlehne 10i in das Sitzbauteil 12i übertragen werden. Die Rückenlehnenaufschlagssicherungsvorrichtung 14i ist dazu vorgesehen, die Rückenlehne 10i in zumindest einem Betriebszustand von dem Sitzbauteil 12i teilweise zu entkoppeln. Durch die teilweise Entkopplung der Rückenlehne 10i von dem Sitzbauteil 12i können in einem Crashfall die Rückenlehne 10i und das Sitzbauteil 12i eine Relativbewegung zueinander ausüben, um so eine Verletzungsgefahr für einen auf dem Flugzeugsitz 32i sitzenden Passagier zu reduzieren. Die Rückenlehnenaufschlagssicherungsvorrichtung 14i ist dabei ausgebildet wie eine in den vorhergehenden Ausführungsbeispielen beschriebene Rückenlehnenaufschlagssicherungsvorrichtung.

Die Flugzeugsitzvorrichtung umfasst ein Zusatzkraftelement 140i. Das Zusatzkraftelement 140i ist dazu vorgesehen, die Rückenlehne 10i unmittelbar vor der teilweisen Entkopplung zumindest temporär zu beschleunigen. Das Zusatzkraftelement 140i ist dabei als eine Gasdruckfeder ausgebildet. Grundsätzlich ist es auch denkbar, dass das Zusatzkraftelement 140i als ein mechanisches Federelement oder ein elektro-magnetisches Federelement ausgebildet ist. Grundsätzlich ist es ebenfalls denkbar, dass das Zusatzkraftelement 140i als ein pyrotechnisches Element ausgebildet ist, das seine Zusatzkraft durch einen pyrotechnischen Effekt bereitstellt. Das Zusatzkraftelement 140i ist funktionell zwischen der Rückenlehne 10i und dem Sitzbauteil 12i angeordnet. Das Zusatzkraftelement 140i ist dabei funktionell zwischen einem Gehäuse 80i der Rückenlehnenaufschlagssicherungsvorrichtung 14i und einem beweglich in dem Gehäuse 80i gelagerten Element 84i angeordnet. Zur Anbindung an das Gehäuse 80i weist das Zusatzkraftelement 140i eine erste Anbindungsstelle 142i auf, über die das Zusatzkraftelement 140i starr mit dem Gehäuse 80i verbunden ist. Die Anbindungsstelle 142i ist an einem Gehäuse 144i des Zusatzkraftelements 140i angeordnet. Das Zusatzkraftelement 140i weist eine zweite Anbindungsstelle 146i auf, über die das Zusatzkraftelement 140i starr mit dem Element 84i der Rückenlehnenaufschlagssicherungsvorrichtung 14i verbunden ist. Die Anbindungsstelle 146i ist an einem ausfahrbaren Kolben 148i des Zusatzkraftelements 140i angeordnet.

In der Verriegelstellung der Rückenlehnenaufschlagssicherungsvorrichtung 14i ist das Zusatzkraftelement 140i vorgespannt zwischen seinen beiden Anbindungsstellen 142i, 146i angeordnet. Das Zusatzkraftelement 140i stellt eine Federkraft bereit, die die zueinander beweglichen Teile der Rückenlehnenaufschlagssicherungsvorrichtung 14i, wie insbesondere das Gehäuse 80i und das Element 84i, auseinanderdrückt. In dem verriegelten Zustand der Rückenlehnenaufschlagssicherungsvorrichtung 14i hat das Zusatzkraftelement 140i keinen Einfluss auf das System. Wird die Rückenlehnenaufschlagssicherungsvorrichtung 14i während eines Crashfalls entriegelt, kann das Zusatzkraftelement 140i seine Federkraft bereitstellen und so das Element 84i und das Gehäuse 80i auseinanderdrücken. Die von dem Zusatzkraftelement 140i bereitgestellte Federkraft wirkt dabei in die gleiche Richtung wie die Verzögerungskraft während des Crashfalls. Dadurch wird eine Verstellung der Rückenlehne 10i zunächst beschleunigt. Dadurch kann ein Verletzungsrisiko für einen Passagier vorteilhaft verringert werden, da die Rückenlehne zusätzlich beschleunigt wird und eine Aufschlagskraft eines Kopfes eines auf dem hinteren Fluggastsitz sitzenden Passagier auf der Rückenlehne 10i reduziert werden kann, da eine Differenzgeschwindigkeit zwischen dem Kopf des Passagiers und der Rückenlehne vorteilhaft reduziert werden kann. Nach der zusätzlichen Beschleunigung der Rückenlehne 10i durch das Zusatzkraftelement 140i wird die Rückenlehne 10i wie in den vorhergehenden Ausführungsbeispielen durch ein Verzögerungselement, das hier nicht näher beschrieben werden soll, verzögert. Eine Beschreibung des Verzögerungselements und aller anderer hier nicht näher dargestellten und beschriebenen Elemente der Flugzeugsitzvorrichtung können den vorhergehenden Ausführungsbeispielen entnommen werden.

### Bezugszeichen

- 10: Rückenlehne
- 12: Sitzbauteil
- 14: Rückenlehnenaufschlagssicherungsvorrichtung
- 16: Trägheitsmodul
- 18: Anbindungselement
- 20: Gehäuseelement
- 22: Kniegelenk
- 24: Formschlusselement
- 26: Führungselement
- 28: Führungselement
- 30: Verzögerungselement
- 32: Flugzeugsitz
- 34: Auslenkeinheit
- 36: Bolzen
- 38: Aufnahme
- 40: Gelenkarm
- 42: Gelenkarm
- 44: Stiftelement
- 46: Lagerelement
- 48: Formschlusselement
- 50: Führungselement
- 52: Stiftelement
- 54: Stiftelement
- 56: Innenraum
- 58: Sitzboden
- 60: Betätigungserhebung
- 62: Ausnehmung
- 64: Betätigungsfläche
- 66: Flugrichtung
- 68: Lagerstelle
- 70: Sperrelement
- 72: Stiftelement
- 74: Formschlusselement
- 76: Führungselement
- 78: Halteelement
- 80: Gehäuse
- 82: Anbindungselement
- 84: Element
- 86: Anbindungselement
- 88: Verriegelungsmodul
- 90: Verriegelelement
- 92: Verriegelelement
- 94: Lagerstelle
- 96: Lagerstelle
- 98: Durchgangsöffnung
- 100: Federelement
- 102: Formschlusselement
- 104: Formschlusselement
- 106: Formschlusselement
- 108: Masseelement
- 110: Betätigungskontur
- 112: Federelement
- 114: Mitnahmeelement
- 116: Formschlusselement
- 118: Kopplungselement
- 120: Einkerbung
- 122: Einkerbung
- 124: Formschlusselement
- 126: Vertiefung
- 128: Absatz
- 130: Abstützwandung
- 132: Öffnung
- 134: Blattfederelement
- 136: Sollbruchstelle
- 138: Kante
- 140: Zusatzkraftelement
- 142: Anbindungsstelle
- 144: Gehäuse
- 146: Anbindungsstelle
- 148: Kolben
- 150: Blende
- 152: Kammer
- 154: Kammer
- 156: Anschlag
- 158: Erhebung

## Patentansprüche

1. Flugzeugsitzvorrichtung mit zumindest einer Rückenlehne (10a; 10b; 10f; 10g; 10i), mit zumindest einem mit der Rückenlehne (10a; 10b; 10f; 10g; 10i) gekoppelten Sitzbauteil (12a; 12b; 12f; 12h; 12i) und mit einer Rückenlehnenaufschlagssicherungsvorrichtung (14a; 14b; 14f; 14g; 14h), die durch eine teilweise Entkopplung der Rückenlehne (10a; 10b; 10f; 10g; 10i) von dem Sitzbauteil (12a; 12b; 12f; 12h; 12i) dazu vorgesehen ist, Aufschlagskräfte auf die Rückenlehne (10a; 10b; 10f; 10g; 10i) zumindest in einem Crashfall zumindest teilweise zu reduzieren, wobei die Rückenlehnenaufschlagssicherungsvorrichtung (14a; 14b; 14f; 14g; 14h) dazu vorgesehen ist, die Rückenlehne (10a; 10b; 10f; 10g; 10i) vor einem Einwirken der Aufschlagskräfte von dem Sitzbauteil (12a; 12b; 12f; 12h; 12i) zu entkoppeln, wobei die Rückenlehnenaufschlagssicherungsvorrichtung (14a; 14b; 14f; 14g; 14h) wenigstens ein Trägheitsmodul (16a; 16b; 16f; 16g; 16h) aufweist, das dazu vorgesehen ist, die Rückenlehnenaufschlagssicherungsvorrichtung (14a; 14b; 14f; 14g; 14h; 14i) zumindest in einem Crashfall zu entkoppeln, **dadurch gekennzeichnet, dass** die Rückenlehnenaufschlagssicherungsvorrichtung (14a) wenigstens ein Kniegelenk (22a) umfasst, das in einem Normalbetriebszustand dazu vorgesehen ist, mit dem Trägheitsmodul (16a) gekoppelt zu sein.

2. Flugzeugsitzvorrichtung nach Anspruch 1, **dadurch gekennzeichnet, dass** das Trägheitsmodul (16a; 16b; 16f; 16g; 16h) dazu vorgesehen ist, die Rückenlehnenaufschlagssicherungsvorrichtung (14a; 14b; 14f; 14g; 14h) zumindest im Normalbetriebszustand zu verriegeln.

3. Flugzeugsitzvorrichtung nach Anspruch 1 oder 2, **dadurch gekennzeichnet, dass** das Trägheitsmodul (16a; 16b; 16f; 16g; 16h) im Crashfall zur Entriegelung der Rückenlehnenaufschlagssicherungsvorrichtung (14a; 14b) dazu vorgesehen ist, aus einer Verriegelposition ausgelenkt zu werden.

4. Flugzeugsitzvorrichtung zumindest nach Anspruch 1, **dadurch gekennzeichnet, dass** das Trägheitsmodul (16a; 16b; 16f; 16g; 16h) im Crashfall dazu vorgesehen ist, vor einem Einwirken der Aufschlagskräfte aus einer Verriegelposition ausgelenkt zu werden.

5. Flugzeugsitzvorrichtung nach einem der vorhergehenden Ansprüche, **dadurch gekennzeichnet, dass** die Rückenlehnenaufschlagssicherungsvorrichtung (14a; 14b) zumindest ein Anbindungselement (18a; 18b) umfasst, das dazu vorgesehen ist, mit dem Sitzbauteil (12a; 12b) gekoppelt zu werden.

6. Flugzeugsitzvorrichtung nach Anspruch 1, **dadurch gekennzeichnet, dass** die Rückenlehnenaufschlagssicherungsvorrichtung (14a; 14b) ein Gehäuseelement (20a; 20b) umfasst, in dem das Trägheitsmodul (16a; 16b) axial verschiebbar gelagert ist.

7. Flugzeugsitzvorrichtung nach Anspruch **6, dadurch gekennzeichnet, dass** das Kniegelenk (22a) gelenkig mit dem Gehäuseelement (20a) und mit dem Anbindungselement (18a) verbunden ist.

8. Flugzeugsitzvorrichtung zumindest nach Anspruch 1, **dadurch gekennzeichnet, dass** das Kniegelenk (22a) wenigstens ein Formschlusselement (24a) aufweist, das in einer Verriegelposition dazu vorgesehen ist, formschlüssig mit dem Trägheitsmodul (16a) verbunden zu sein.

9. Flugzeugsitzvorrichtung nach Anspruch 6, **dadurch gekennzeichnet, dass** das Gehäuseelement (20a; 20b) wenigstens ein Führungselement (26a; 26b) aufweist, in dem das Anbindungselement (18a; 18b) mit einem ersten Ende axial verschiebbar befestigt ist.

10. Flugzeugsitzvorrichtung zumindest nach Anspruch 6, **dadurch gekennzeichnet, dass** das Gehäuseelement (20a) wenigstens ein Führungselement (28a) aufweist, über das das Trägheitsmodul (16a) axial verschiebbar in dem Gehäuseelement (20a) angeordnet ist.

11. Flugzeugsitzvorrichtung zumindest nach Anspruch 5 und 6, **dadurch gekennzeichnet, dass** die Rückenlehnenaufschlagssicherungsvorrichtung (14a; 14b; 14c; 14d) wenigstens ein Verzögerungselement (30a; 30b; 30c; 30d) aufweist, das zur Aufnahme von Trägheitsenergie der Rückenlehne (10a; 10b) nach einem Auslösen der Rückenlehnenaufschlagssicherungsvorrichtung (14a; 14b; 14c; 14d) vorgesehen ist.

12. Flugzeugsitzvorrichtung nach einem der vorhergehenden Ansprüche, **dadurch gekennzeichnet, dass** die Rückenlehne (10f; 10g; 10i) dazu vorgesehen ist, nach der teilweisen Entkopplung wieder in einer Verriegelstellung verriegelt zu werden.

13. Flugzeugsitzvorrichtung nach einem der vorhergehenden Ansprüche, **dadurch gekennzeichnet, dass** die Rückenlehnenaufschlagssicherungsvorrichtung (14f; 14g; 14h; 14i) dazu vorgesehen ist, nach der teilweisen Entkopplung wieder in eine Verriegelstellung gebracht zu werden.

14. Flugzeugsitzvorrichtung nach einem der vorhergehenden Ansprüche, **dadurch gekennzeichnet, dass** die Rückenlehnenaufschlagssicherungsvorrichtung (14f; 14g; 14h) wenigstens ein Verriegelungsmodul (88f; 88g; 88h) aufweist, das in einer Verriegelstellung die Rückenlehnenaufschlagssicherungsvorrichtung (14f; 14g; 14h) sperrt und in einer Entriegelstellung diese zumindest teilweise entkoppelt, wobei die Rückenlehnenaufschlagssicherungsvorrichtung (14f; 14g; 14h) von der Entriegelstellung in die Verriegelstellung überführbar ist.

15. Flugzeugsitzvorrichtung nach einem der vorhergehenden Ansprüche, **gekennzeichnet durch** wenigstens ein Zusatzkraftelement (140i), das zumindest dazu vorgesehen ist, die Rückenlehne (10i) unmittelbar nach der teilweisen Entkoppelung zumindest temporär zu beschleunigen.

16. Flugzeugsitz mit wenigstens einer Flugzeugsitzvorrichtung nach einem der vorhergehenden Ansprüche.

17. Rückenlehnenaufschlagssicherungsvorrichtung nach einem der Ansprüche 1 bis 15.

## Claims

1. Aircraft seat device with at least one backrest (10a; 10b; 10f; 10g; 10h), with at least one seat component (12a; 12b; 12f; 12h; 12i) that is coupled with the backrest (10a; 10b; 10f; 10g; 10h) and with a backrest impact safety device (14a; 14b; 14f; 14g; 14h) that is configured, by way of a partial decoupling of the backrest (10a; 10b; 10f; 10g; 10h) from the seat component (12a; 12b; 12f; 12h; 12i), to at least partly reduce impact forces on the backrest (10a; 10b; 10f; 10g; 10h) at least in the event of a crash,
wherein the backrest impact safety device (14a; 14b; 14f; 14g; 14h) is configured to decouple the backrest (10a; 10b; 10f; 10g; 10h) from the seat component (12a; 12b; 12f; 12h; 12i) prior to the impact forces taking effect,
wherein the backrest impact safety device (14a; 14b; 14f; 14g; 14h) comprises at least one inertia module (16a; 16b; 16f; 16g; 16h) that is configured for a decoupling of the backrest impact safety device (14a; 14b; 14f; 14g; 14h; 14i) at least in the event of a crash,
**characterised in that** the backrest impact safety device (14a) comprises at least one knee joint (22a) that is configured, in a normal operation state, to be coupled with the inertia module (16a).

2. Aircraft seat device according to claim 1,
**characterised in that** the inertia module (16a; 16b; 16f; 16g; 16h) is configured, at least in the normal operation state, to lock the backrest impact safety device (14a; 14b; 14f; 14g; 14h).

3. Aircraft seat according to claim 1 or 2,
**characterised in that** the inertia module (16a; 16b; 16f; 16g; 16h) is configured, in the event of a crash, for the purpose of an unlocking of the backrest impact safety device (14a; 14b), to be deflected from a locking position.

4. Aircraft seat device at least according to claim 1,
**characterised in that** the inertia module (16a; 16b; 16f; 16g; 16h) is configured, in the event of a crash, to be deflected from a locking position prior to the impact forces taking effect.

5. Aircraft seat device according to one of the preceding claims,
**characterised in that** the backrest impact safety device (14a; 14b) comprises at least one connection element (18a; 18b) that is configured to be coupled with the seat component (12a; 12b).

6. Aircraft seat device according to claim 1,
**characterised in that** the backrest impact safety device (14a; 14b) comprises a housing element (20a; 20b), in which the inertia module (16a; 16b) is supported in such a way that it is axially displaceable.

7. Aircraft device seat according to claim 6,
**characterised in that** the knee joint (22a) is connected in an articulated fashion with the housing element (20a) and with the connection element (18a).

8. Aircraft seat device at least according to claim 1,
**characterised in that** the knee joint (22a) comprises at least one form-fit element (24a) which is configured, in a locking position, to be connected with the inertia module (16a) via a form-fit connection.

9. Aircraft seat device according to claim 6,
**characterised in that** the housing element (20a; 20b) comprises at least one guiding element (26a; 26b), in which the connection element (18a; 18b) is fixated with a first end in an axially displaceable manner.

10. Aircraft seat device at least according to claim 6,
**characterised in that** the housing element (20a) comprises at least one guiding element (28a), via which the inertia module (16a) is arranged in the housing element (20a) in an axially displaceable manner.

11. Aircraft seat device at least according to claim 5 or 6,
**characterised in that** the backrest impact safety device (14a; 14b; 14c; 14d) comprises at least one delay element (30a; 30b; 30c; 30d), which is configured to receive inertia energy from the backrest (10a; 10b) following a triggering of the backrest impact safety device (14a; 14b; 14c; 14d).

12. Aircraft seat device according to one of the preceding claims,
**characterised in that** the backrest (10f; 10g; 10i) is configured, following the partial decoupling, to be re-locked in a locking position.

13. Aircraft seat device according to one of the preceding claims,
**characterised in that** the backrest impact safety device (14f; 14g; 14h; 14i) is configured, following the partial decoupling, to be re-transferred into a locking position.

14. Aircraft seat device according to one of the preceding claims,
**characterised in that** the backrest impact safety device (14f; 14g; 14h) comprises at least one locking module (88f; 88g; 88h) which, in a locking position, blocks the backrest impact safety device (14f; 14g; 14h) and, in an unlocking position, at least partly decouples the backrest impact safety device (14f; 14g; 14h), wherein the backrest impact safety device (14f; 14g; 14h) is transferable from the unlocking position into the locking position.

15. Aircraft seat device according to one of the preceding claims,
**characterised by** at least one additional force element (140i) that is at least configured for an at least temporary acceleration of the backrest (10i) directly after the partial decoupling.

16. Aircraft seat with at least one aircraft seat device according to one of the preceding claims.

17. Backrest impact safety device according to one of claims 1 to 15.

## Revendications

1. Dispositif de siège d'avion avec au moins un dossier (10a ; 10b ; 10f ; 10g ; 10i), avec au moins un composant structurel de siège (12a ; 12b ; 12f ; 12h ; 12i) couplé avec le dossier (10a ; 10b ; 10f ; 10g ; 10i) et avec un dispositif sauvegarde-choc de dossier (14a ; 14b ; 14f ; 14g ; 14h) qui est configuré, par le biais d'un découplage partiel du dossier (10a ; 10b ; 10f ; 10g ; 10i) du composant structurel de siège (12a ; 12b ; 12f ; 12h ; 12i), pour réduire au moins partiellement des forces d'impact sur le dossier (10a ; 10b ; 10f ; 10g ; 10i) au moins en cas de crash,
le dispositif sauvegarde-choc de dossier (14a ; 14b ; 14f ; 14g ; 14h) étant prévu à découpler le dossier (10a ; 10b ; 10f ; 10g ; 10i) du composant structurel de siège (12a ; 12b ; 12f ; 12h ; 12i) avant un effet des forces d'impact,
le dispositif sauvegarde-choc de dossier (14a ; 14b ; 14f ; 14g ; 14h) comprenant au moins un module d'inertie (16a ; 16b ; 16f ; 16g ; 16h), qui est prévu à découpler le dispositif sauvegarde-choc de dossier (14a ; 14b ; 14f ; 14g ; 14h ; 14i) au moins en cas de crash,
**caractérisé en ce que** le dispositif sauvegarde-choc de dossier (14a) comporte au moins une articulation-genou (22a) qui est prévue, en état opératif normal, à être couplée avec le module d'inertie (16a).

2. Dispositif de siège d'avion selon la revendication 1,
**caractérisé en ce que** le module d'inertie (16a ; 16b ; 16f ; 16g ; 16h) est prévu, au moins en état opératif normal, à verrouiller le dispositif sauvegarde-choc de dossier (14a ; 14b ; 14f ; 14g ; 14h).

3. Dispositif de siège d'avion selon l'une quelconque des revendications 1 ou 2,
**caractérisé en ce qu',** en cas de crash, pour un déverrouillage du dispositif sauvegarde-choc de dossier (14a ; 14b), le module d'inertie (16a ; 16b ; 16f ; 16g, 16h) est prévu à être défléchi d'une position de verrouillage.

4. Dispositif de siège d'avion au moins selon la revendication 1,
**caractérisé en ce qu',** en cas de crash, le module d'inertie (16a ; 16b, 16f ; 16g ; 16h) est prévu à être défléchi d'une position de verrouillage avant un effet des forces d'impact.

5. Dispositif de siège d'avion selon l'une quelconque des revendications précédentes,
**caractérisé en ce que** le dispositif sauvegarde-choc de dossier (14a ; 14b) comporte au moins un élément de raccordement (18a ; 18b) prévu à être couplé avec le composant structurel de siège (12a ; 12b).

6. Dispositif de siège d'avion selon la revendication 1,
**caractérisé en ce que** le dispositif sauvegarde-choc de dossier (14a ; 14b) comporte un élément boîtier (20a ; 20b), dans lequel le module d'inertie (16a ; 16b) est supporté de telle manière qu'il soit axialement déplaçable.

7. Dispositif de siège d'avion selon la revendication 6,
**caractérisé en ce que** l'articulation-genou (22a) est raccordé de manière articulaire avec l'élément boîtier (20a) et avec l'élément de raccordement (18a).

8. Dispositif de siège d'avion au moins selon la revendication 1,
**caractérisé en ce que** l'articulation-genou (22a) comporte au moins un élément de liaison en forme (24a) qui est prévu, dans une position de verrouillage, à être raccordé avec le module d'inertie (16a) par liaison en forme.

9. Dispositif de siège d'avion selon la revendication 6,
**caractérisé en ce que** l'élément boîtier (20a ; 20b) comporte au moins un élément de guidage (26a ; 26b), dans lequel l'élément de raccordement (18a ; 18b) est fixé d'une première extrémité de telle manière qu'il soit axialement déplaçable.

10. Dispositif de siège d'avion au moins selon la revendication 6,
**caractérisé en ce que** l'élément boîtier (20a) comporte au moins un élément de guidage (28a), par le biais duquel le module d'inertie (16a) est disposé dans l'élément boîtier (20a) de telle manière qu'il soit axialement déplaçable.

11. Dispositif de siège d'avion au moins selon l'une quelconque des revendications 5 ou 6,
**caractérisé en ce que** le dispositif sauvegarde-choc de dossier (14a ; 14b ; 14c ; 14d) comporte au moins un élément retardant (30a ; 30b ; 30c ; 30d) prévu à recevoir une énergie d'inertie du dossier (10a ; 10b) après un démarrage du dispositif sauvegarde-choc de dossier (14a ; 14b ; 14c ; 14d).

12. Dispositif de siège d'avion selon l'une quelconque des revendications précédentes,
**caractérisé en ce que** le dossier (10f ; 10g ; 10i) est prévu, suivant le découplage partiel, à être ré-verrouillé dans une position de verrouillage.

13. Dispositif de siège d'avion selon l'une quelconque des revendications précédentes,
**caractérisé en ce que** le dispositif sauvegarde-choc de dossier (14f ; 14g ; 14h ; 14i) est prévu, suivant le découplage partiel, à être remis dans une position de verrouillage.

14. Dispositif de siège d'avion selon l'une quelconque des revendications précédentes,
**caractérisé en ce que** le dispositif sauvegarde-choc de dossier (14f ; 14g ; 14h) comporte au moins un module de verrouillage (88f ; 88g ; 88h) qui, dans une position de verrouillage, bloque le dispositif sauvegarde-choc de dossier (14f ; 14g ; 14h) et, dans une position de déverrouillage, découple ledit dispositif sauvegarde-choc (14f ; 14g ; 14h) au moins partiellement, le dispositif sauvegarde-choc de dossier (14f ; 14g, 14h) étant transférable de la position de déverrouillage dans la position de verrouillage.

15. Dispositif de siège d'avion selon l'une quelconque des revendications précédentes,
**caractérisé par** au moins un élément additionnel de force (140i), qui est au moins prévu à au moins temporairement accélérer le dossier (10i) directement suivant le découplage partiel.

16. Siège d'avion avec au moins un dispositif de siège d'avion selon l'une quelconque des revendications précédentes.

17. Dispositif sauvegarde-choc de dossier selon l'une quelconque des revendications 1 à 15.
